# EUROPÄISCHE PATENTSCHRIFT

(11) **EP 3 215 595 B1**
(45) Veröffentlichungstag und Bekanntmachung des Hinweises auf die Patenterteilung: **13.03.2024**
(21) Anmeldenummer: 15791555.4
(22) Anmeldetag: 02.11.2015
(51) Int. Cl.: C12C 7/16, C12C 7/14, C12C 7/04

(54) **VORRICHTUNG, SYSTEM UND VERFAHREN ZUR GEWINNUNG UND/ODER ZUM KLÄREN VON WÜRZE UND ANDEREN MEDIEN IN DER BIERBRAUEREI UND GETRÄNKEINDUSTRIE UND ENTSPRECHENDE VERWENDUNGEN**
DEVICE, SYSTEM AND METHOD FOR OBTAINING AND/OR FOR CLARIFYING WORT AND OTHER MEDIA IN THE BEER BREWING AND BEVERAGE INDUSTRY AND CORRESPONDING USES
DISPOSITIF, SYSTÈME ET PROCÉDÉ POUR OBTENIR ET/OU CLARIFIER UN MOÛT ET D'AUTRES FLUIDES EN BRASSERIE ET DANS L'INDUSTRIE DES BOISSONS ET UTILISATIONS CORRESPONDANTES

(30) Priorität: 03.11.2014 DE 102014116008; 07.11.2014 DE 102014116308; 07.11.2014 DE 102014116304
(43) Veröffentlichungstag der Anmeldung: 13.09.2017
(73) Patentinhaber: ZIEMANN HOLVRIEKA GmbH, 71636 Ludwigsburg (DE)
(72) Erfinder: GEHRIG, Klaus, 71640 Ludwigsburg (DE); WASMUHT, Klaus Karl, 91792 Ellingen (DE); BECHER, Tobias, 71701 Schwieberdingen (DE); ZILLER, Konstantin, 71638 Ludwigsburg (DE)
(74) Vertreter: Kuhnen & Wacker Patent- und Rechtsanwaltsbüro PartG mbB
(86) Internationale Anmeldenummer: PCT/EP2015/075474
(87) Internationale Veröffentlichungsnummer: WO 2016/071286

(56) Entgegenhaltungen:
- WO-A1-2007/136258
- DE-A1- 1 642 743
- DE-A1-102007 052 471
- DE-A1-102008 039 373
- DE-B- 1 016 239
- DE-B- 1 254 566
- DE-C- 295 942
- DE-C- 826 742
- US-A- 1 922 730
- US-A- 2 399 710
- US-A- 3 452 669

## Beschreibung

Die Erfindung betrifft eine Vorrichtung, ein System und ein Verfahren zur Gewinnung einer Würze aus einer Maische in der Bierbrauerei oder Getränkeindustrie und eine entsprechende Verwendung.

### Einleitung

Bei der Würzegewinnung in der Bierbrauerei oder Getränkeindustrie, insbesondere beim herkömmlichen Läuterverfahren, wie beispielsweise in einem Läuterbottich, wird nach dem Einfüllen der Trennvorrichtung mit Maische und zumeist Einhalten einer Läuterruhe eine Filterschicht aus der Maische stammendem Material, nämlich Spelzen oder sonstige Treberbestandteile, auf dem Senkboden oder am Filtertuch ausgebildet. Danach wird eine zunächst trübe Würze abgezogen, die üblicherweise mehrfach rückgeführt und wieder auf die Filterschicht aufgebracht wird, bis die gewünschte Klärung der Würze, d.h., eine hinreichende Abreicherung an Fest- und Trübungsstoffen, erreicht ist. Dann wird die sogenannte Vorderwürze abgezogen. Damit finden herkömmlich die Trennung der Maische in Vorderwürze und Trebern und die Klärung der gewonnenen Würze in derselben Vorrichtung und überwiegend zeitgleich statt. Nach dem Einziehen der Würze in den Filterkuchen (Treberschicht) wird heißes Wasser auf die Oberfläche des Filterkuchens zum Auswaschen der Treberschicht gegeben. Hierdurch wird weiterer Extrakt in Gestalt einer verdünnten Würze, der sogenannten Nachgüsse, gewonnen.

Aus einer Mehrzahl von technologischen Gründen besteht bis heute der Wunsch, Würzen mit einer hohen Klarheit zu gewinnen. So herrscht in den Fachkreisen der deutschen Brauwirtschaft die Meinung vor, dass die Gewinnung trüber Läuterwürzen mit Blick auf die Bierqualität zu vermeiden ist. Dagegen wird eine möglichst hohe Klarheit der Würze beim Läutern als Voraussetzung für Erzielung einer einwandfreien Bierqualität, insbesondere bezüglich der Geschmacksqualität, der Geschmacksstabilität, der physikalische Stabilität und/oder der Schaumstabilität, angesehen.

Nachteilig bei der herkömmlichen Würzegewinnung ist, dass der Verfahrensschritt des Läuterns mit wenigstens 90 min pro Sud, oft 120 min pro Sud oder sogar länger, eine lange Zeitdauer beanspruchte. Damit stellt die Würzegewinnung mittlerweile in Bezug auf die im Sudhaus ablaufenden Verfahrensschritte den zeitlich begrenzenden Verfahrensschritt dar. Es besteht seit langem der Wunsch, den Verfahrensschritt der Würzegewinnung und -klärung erheblich zu verkürzen oder sogar als kontinuierlichen Verfahrensschritt zu realisieren. In der Praxis ist eine Verkürzung der Läuterzeit auf Dauern, die wesentlich unter den vorstehend genannten, bisher realisierten Dauern trotz jahrzehntelanger Weiterentwicklung und Optimierung der bestehenden Läutersysteme bislang nicht gelungen.

Zudem ist es bislang nicht gelungen, ein praxistaugliches Verfahren zur kontinuierlichen Würzegewinnung bereitzustellen.

Dem Fachmann sind Verfahren und Vorrichtungen zur Gewinnung von Würze aus Maische in der Bierbrauerei aus den Druckschriften DE 1 254 566 A, US 1,922,730 B, DE 1 016 239 A, DE 1 642 743 A, WO 2007/136 258 A1, und DE 295 942 C bekannt.

### Definitionen

Im Sinn der Erfindung umfasst der Begriff "Maische" die dem Fachmann im Brauerei- oder Getränkebereich geläufige Bedeutung. Dabei kann "Maische" aber auch verdünnte Maischen, insbesondere Gemische aus einer Maische und Wasser, und konzentrierten Maischen, z.B. Restmaischen, also Maischen, aus denen Würze oder verdünnten Würze bereits abgetrennt wurde, einschließen. Zudem kann "Maische" alle dem Fachmann bekannten Arten von Maischen, insbesondere Biermaischen und Whiskeymaischen, umfassen. Erfindungsgemäß kann der Begriff "Maischen" aber auch auf Medien beschränkt sein, die zur Herstellung von Getränken, vorzugsweise von alkoholischen Getränken, insbesondere Bier oder Biermischgetränks oder Getränken auf Würzebasis geeignet sind.

Unter dem Begriff "Trennvorrichtung" wird erfindungsgemäß jede Vorrichtung verstanden, die geeignet ist, ein oder mehrere Bestandteile eines Stoffgemischs zu trennen. Insbesondere schließt "Trennvorrichtung" ein Filter, ein Sieb oder ähnliches ein.

Unter "Mischen" wird erfindungsgemäß das Zusammengeben zweier oder mehrerer Stoffe verstanden. Dies kann aber auch das Homogenisieren der resultierenden Mischung einschließen.

Unter dem Begriff "Klären" oder "Klärung" wird erfindungsgemäß ein Vorgang verstanden, bei dem die Klarheit eines Mediums durch teilweise oder vollständige Abscheidung von trübungsbildenden Stoffen erhöht wird. Darüber hinaus kann der Begriff "Klären" oder "Klärung" auch das Einstellen einer Trübung eines Mediums umfassen.

Im Sinne der vorliegenden Anmeldung wird ein Verfahren oder Verfahrensschritt als "kontinuierlich" definiert, wenn dieses Verfahren oder dieser Verfahrensschritt ohne Unterbrechungen durchgeführt wird oder abläuft. Erfindungsgemäß kann die Definition von "kontinuierlich" zusätzlich jedoch auch Verfahren oder Verfahrensschritte umfassen, die eine oder mehrere Unterbrechungen in einem zeitlichen Ausmaß von insgesamt höchstens 20 %, vorzugsweise höchstens 15 %, vorzugsweise höchstens 10 %, vorzugsweise höchstens 5 %, insbesondere höchstens 2 %, der Gesamtdauer des betreffenden Verfahrens oder Verfahrensschritts aufweisen; oder eine oder mehrere Unterbrechungen in einem Ausmaß des Massen- oder Volumendurchsatzes von insgesamt höchstens 20 %, vorzugsweise höchstens 15 %, vorzugsweise höchstens 10 %, vorzugsweise höchstens 5 %, insbesondere höchstens 2 %, des gesamten Massen- oder Volumendurchsatzes des betreffenden Verfahrens oder Verfahrensschritts aufweisen.

Im Rahmen dieser Anmeldung werden alle Verfahren oder Verfahrensschritte, welche nicht in die vorstehende Definition von "kontinuierlich" fallen, als "diskontinuierlich" oder "batchweise" definiert. Dabei kann die Definition von "diskontinuierlich" auch Verfahren oder Verfahrensschritte fallen, deren Durchführung zwar ohne Unterbrechung stattfindet, deren Durchführung jedoch nach höchstens acht Stunden, vorzugsweise höchstens sechs Stunden, abgeschlossen ist und bei denen eine vorbestimmte Portion eine Substrats, wie beispielsweise ein Sud, Doppelsud oder Teilsud und dergleichen einer Maische oder einer Würze, behandelt oder verarbeitet wird.

Im Sinne der vorliegenden Anmeldung umfasst der Begriff "Oberfläche" (FA, FA1, FA2, ...) einer Trennvorrichtung (T, T1, T2, ...) den Teil der gesamten, äußeren, d.h. mit der Umgebung in Kontakt befindlichen Ober- oder Umfangsfläche der Trennvorrichtung, der die Öffnungen OP zum Trennen einer Maische oder Restmaische und damit eine Trenn- oder Filterfunktion aufweist.

### Aufgabe der Erfindung

Es ist eine Aufgabe der Erfindung, eine Vorrichtung, ein System und ein Verfahren zur Gewinnung und/oder zur Klärung von Würze und anderen Medien in der Bierbrauerei und Getränkeindustrie und entsprechende Verwendungen bereitzustellen, die geeignet sind, die Gewinnung und/oder Klärung von Würze und anderen Medien aus dem Bereich der Bierbrauerei und Getränkeindustrie, bereitzustellen, zu verbessern oder zu vereinfachen.

### Beschreibung der Erfindung

Die vorstehend beschriebene Aufgabe wird durch die Gegenstände der Ansprüche gelöst. Vorteilhafte Ausführungsformen der Erfindung sind Gegenstand der abhängigen Ansprüche.

So kann die erfindungsgemäße Vorrichtung dadurch gekennzeichnet sein, dass die Trennvorrichtung T derart in der Vorrichtung V angeordnet ist, dass durch die Ausführung der relativen Bewegung oder Drehbewegung der Kontakt der Oberfläche FA oder einer Teilfläche derselben mit der in der Aufnahmeeinrichtung AG vorhandenen Maische MA zeitweise unterbrechbar und nach erfolgter Unterbrechung wiederherstellbar ist; wobei das Unterbrechen und Wiederherstellen des Kontakts der Oberfläche FA oder eines Teils derselben mit der Maische MA vorzugsweise wiederholbar ist.

Ferner kann die erfindungsgemäße Vorrichtung dadurch gekennzeichnet sein, dass die Trennvorrichtung T derart in der Vorrichtung V angeordnet ist, dass durch die Ausführung der relativen Bewegung oder Drehbewegung die Oberfläche FA oder eine Teilfläche derselben die Maische MA im Bereich des Maischespiegels oder am Maischespiegel oder im Bereich der Maischeoberfläche oder an der Maischeoberfläche verlässt, dort aus der Maische MA austritt oder der Kontakt zur Maische MA dort unterbrochen wird, wobei die Bewegungsrichtung der Oberfläche FA, betrachtet im Bereich des Maischespiegels oder am Maischespiegel, mit dem Maischespiegel oder der Maischeoberfläche oder der Horizontalen einem Winkel von 30 bis 90 °, vorzugsweise 45 bis 90 °, vorzugsweise 60 bis 90 °, vorzugsweise 70 bis 90 °, vorzugsweise 80 bis 90 °, vorzugsweise 85 bis 90 °, vorzugsweise 87 bis 90 °, insbesondere 90°, einschließt.

Ferner kann die erfindungsgemäße Vorrichtung dadurch gekennzeichnet sein, dass die Vorrichtung V, insbesondere die Trennvorrichtung T, mittels einer Steuervorrichtung C derart steuerbar ist, dass eine relative Bewegung oder Drehbewegung der Oberfläche FA während der gesamten Dauer des Trennens der Maische MA oder der Restmaische RM erfolgt.

Ferner kann die erfindungsgemäße Vorrichtung dadurch gekennzeichnet sein, dass die Trennvorrichtung T derart zur Aufnahmeeinrichtung AG angeordnet ist, dass während des Betriebs der Vorrichtung V zum Trennen der Maische MA die Oberfläche FA zu einem Anteil im Bereich von 1 bis 95 %, vorzugsweise 5 bis 25 %, vorzugsweise 5 bis 20 %, vorzugsweise 5 bis 15 %, vorzugsweise 5 bis 10 %, vorzugsweise 5 bis 95 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische (MA) bedeckt ist oder in die Maische MA eintaucht, wenn die Maische MA in der Aufnahmeeinrichtung AG vorhanden ist; und
die Oberfläche FA im Umfang des restlichen Anteils vorzugsweise in einen gasgefüllten Raum GR1 oberhalb der Maische MA angeordnet ist oder darin hineinragt.

Ferner kann die erfindungsgemäße Vorrichtung dadurch gekennzeichnet sein, dass die Öffnungen OP eine Größe oder Porengröße oder Maschenweite im Bereich von 5 bis 10.000 µm, vorzugsweise 10 bis 1.000 µm, vorzugsweise 10 bis 500 µm, vorzugsweise 20 bis 400 µm, vorzugsweise 25 bis 500 µm, vorzugsweise 30 bis 300 µm, vorzugsweise 40 bis 250 µm, vorzugsweise 45 bis 350 µm, vorzugsweise 45 bis 200 µm, vorzugsweise 45 bis 100 µm, vorzugsweise 55 bis 300 µm, insbesondere 65 bis 250 µm, aufweisen.

Ferner kann die erfindungsgemäße Vorrichtung dadurch gekennzeichnet sein, dass die Trennvorrichtung T als eine Trennvorrichtung mit einer drehbar gelagerten Welle oder mit einer drehbar gelagerten Oberfläche FA oder als drehbar gelagerte Trennvorrichtung oder drehbar gelagertes Filter ausgeführt ist; und/oder
die Trennvorrichtung T in scheibenförmiger oder zylindrischer Gestalt, oder in im Wesentlichen scheibenförmiger oder zylindrischer Gestalt ausgebildet ist; und/oder
wobei die Grundfläche und/oder die Mantelfläche der Trennvorrichtung T teilweise oder vollständig als Trenn- oder Filterfläche, insbesondere als die Oberfläche FA, ausgebildet ist; und/oder
wobei die Trennvorrichtung T derart in der Vorrichtung V angeordnet ist, dass die Mittelachse oder eine Drehachse der Trennvorrichtung T oder der Oberfläche FA im Wesentlichen parallel zum Flüssigkeitsspiegel einer in die Aufnahmeeinrichtung AG der Vorrichtung V eingefüllten Flüssigkeit angeordnet ist, oder die Mittelachse oder eine Drehachse der Trennvorrichtung T oder der Oberfläche FA mit dem Flüssigkeitsspiegel einer in die Aufnahmeeinrichtung AG der Vorrichtung V eingefüllten Flüssigkeit oder mit der Horizontalen einen Winkel mit einem Betrag im Bereich von 0 bis < 90 °, vorzugsweise 0 bis 45 °, vorzugsweise 0 bis 30 °, vorzugsweise 0 bis 20 °, vorzugsweise 0 bis 15 °, vorzugsweise 0 bis 10 °, insbesondere 0 bis 5 °, einschließt.

Ferner kann die erfindungsgemäße Vorrichtung dadurch gekennzeichnet sein, dass die relative Bewegung oder Drehbewegung der Oberfläche FA ununterbrochen oder zeitweise, insbesondere in regelmäßigen zeitlichen Intervallen, erfolgt.

Ferner kann die erfindungsgemäße Vorrichtung dadurch gekennzeichnet sein, dass die Vorrichtung V wenigstens einen Strömungsweg ausbildet; und/oder
der wenigstens eine Strömungsweg von einer Flüssigkeit, insbesondere von der Maische MA, schwerkraftgetrieben durchströmbar ist.

Ferner kann die erfindungsgemäße Vorrichtung dadurch gekennzeichnet sein, dass die Oberfläche FA als eine ebene oder plane Fläche oder als eine Fläche ausgebildet ist, die eine zur Maische MA konvex oder konkav gewölbte oder wellenförmige oder zickzackförmige Kontur aufweist; und/oder
die Trennvorrichtung T, vorzugsweise die Oberfläche FA, wenigstens einen Vorsprung VO aufweist; wobei der wenigstens eine Vorsprung VO derart angeordnet ist, dass er mit der Maische in Kontakt bringbar ist; wobei der wenigstens eine Vorsprung VO geeignet ist, aus der Maische MA stammende Feststoffpartikeln in der Maische MA zu bewegen oder mitzunehmen und vorzugsweise aus der Maische MA und/oder aus der Aufnahmeeinrichtung AG auszutragen; wobei der wenigstens eine Vorsprung VO vorzugsweise eine Gestalt nach Art eines Stegs, Paddels, Sterns, einer Rinne oder einer Tasche aufweist.

Ferner kann die erfindungsgemäße Vorrichtung dadurch gekennzeichnet sein, dass die erste Trennvorrichtung T11 und die zweite Trennvorrichtung T12 jeweils als eine Trennvorrichtung mit einer drehbar gelagerten Welle oder als drehbar gelagerte Trennvorrichtung oder drehbar gelagertes Filter ausgeführt sind; und/oder
wobei die erste Trennvorrichtung T11 und die zweite Trennvorrichtung T12 jeweils derart in der Vorrichtung (V) angeordnet sind, dass die Mittelachse oder eine Drehachse von jeder der ersten Trennvorrichtung T 11 und der zweiten Trennvorrichtung T12 oder von jeder der ersten Oberfläche FA11 und der zweiten Oberfläche FA12 im Wesentlichen parallel zu einem Flüssigkeitsspiegel einer in die Aufnahmeeinrichtung AG der Vorrichtung V eingefüllten Flüssigkeit angeordnet ist, oder die Mittelachse oder eine Drehachse von jeder der ersten Trennvorrichtung T11 und der zweiten Trennvorrichtung T12 oder von jeder der ersten Oberfläche FA11 und der zweiten Oberfläche FA12 mit einem Flüssigkeitsspiegel einer in die Aufnahmeeinrichtung AG der Vorrichtung V eingefüllten Flüssigkeit oder mit der Horizontalen einen Winkel mit einem Betrag von 0 bis 15 °, vorzugsweise 0 bis 10 °, insbesondere 0 bis 5 °, einschließt; und/oder
wobei die erste Trennvorrichtung (T11) und die zweite Trennvorrichtung T12 in der Vorrichtung V und derart zueinander angeordnet sind, dass die Mittelachsen oder eine Drehachse von jeder der ersten Trennvorrichtung T11 und der zweiten Trennvorrichtung T12 oder von jeder der ersten Oberfläche FA11 und der zweiten Oberfläche FA12 einen Winkel mit einem Betrag von 0 bis 15 °, vorzugsweise 0 bis 10 °, insbesondere 0 bis 5 °, einschließen; und/oder
wobei die erste Trennvorrichtung T11 und die zweite Trennvorrichtung T12 eine identische Mittelachse oder Drehachse aufweisen oder ihre Mittelachsen oder Drehachsen kollinear in der Vorrichtung V angeordnet sind; und/oder
wobei die erste Trennvorrichtung T11 und die zweite Trennvorrichtung T12 eine gemeinsame Drehwelle aufweisen; und/oder
wobei die erste Trennvorrichtung T11 und die zweite Trennvorrichtung T12 derart in der Vorrichtung V angeordnet sind, dass der größte, als Normalabstand gemessene Abstand zwischen der ersten Oberfläche FA11 der ersten Trennvorrichtung T11 und der zweiten Oberfläche FA12 der zweiten Trennvorrichtung T12 von 4 bis 30 cm, vorzugsweise 5 bis 25 cm, vorzugsweise 10 bis 30 cm, insbesondere 10 bis 20 cm, ist; und/oder
der kleinste, als Normalabstand gemessene Abstand zwischen der ersten Oberfläche FA11 der ersten Trennvorrichtung T11 und der zweiten Oberfläche FA12 der zweiten Trennvorrichtung T12 von 4 bis 30 cm, vorzugsweise 5 bis 25 cm, vorzugsweise 10 bis 30 cm, insbesondere 10 bis 20 cm, ist.

Ferner kann die erfindungsgemäße Vorrichtung dadurch gekennzeichnet sein, dass die erste Trennvorrichtung T11 und die zweite Trennvorrichtung T12 derart in der Vorrichtung V angeordnet ist, dass der größte, als Normalabstand gemessene Abstand zwischen der ersten Oberfläche FA11 und einer Wand der Vorrichtung V, vorzugsweise der Aufnahmeeinrichtung AG, und zwischen der zweiten Oberfläche FA12 und der Wand der Vorrichtung V, vorzugsweise der Aufnahmeeinrichtung AG, von 3 bis 50 cm, vorzugsweise 4 bis 30 cm, vorzugsweise 5 bis 25 cm, vorzugsweise 10 bis 30 cm, insbesondere 10 bis 20 cm, ist; und/oder
der kleinste, als Normalabstand gemessene Abstand zwischen der ersten Oberfläche FA11 und einer Wand der Vorrichtung V, vorzugsweise der Aufnahmeeinrichtung AG, und zwischen der zweiten Oberfläche FA12 und der Wand der Vorrichtung V, vorzugsweise der Aufnahmeeinrichtung AG, von > 2 cm bis 100 cm, vorzugsweise 3 bis 50 cm, vorzugsweise 4 bis 30 cm, vorzugsweise 5 bis 25 cm, vorzugsweise 10 bis 30 cm, insbesondere 10 bis 20 cm, ist.

Ferner kann die erfindungsgemäße Vorrichtung dadurch gekennzeichnet sein, dass sie aufweist:
eine wannenartige Aufnahmeeinrichtung AG zum Aufnehmen der Maische MA;
wobei die erste Trennvorrichtung T11 und die zweite Trennvorrichtung T12 jeweils als drehbar gelagertes, scheibenförmiges oder zylindrisches Filter ausgebildet ist;
wobei die erste Oberfläche FA11 die Grundfläche der ersten Trennvorrichtung T 11 ist;
wobei die zweite Oberfläche FA12 die Grundfläche der zweiten Trennvorrichtung T12 ist;
wobei die erste Oberfläche FA11 und die zweite Oberfläche FA12 jeweils als ebene oder im Wesentlichen ebene Filterfläche mit einer Vielzahl von Öffnungen OP ausgebildet sind;
wobei die Vorrichtung V vorzugsweise geeignet ist, mittels der ersten Oberfläche FA11 und der zweiten Oberfläche FA12 die Maische MA in die Würze WO und eine Restmaische RM kontinuierlich oder diskontinuierlich zu trennen;
wobei die Drehachse der ersten Trennvorrichtung T11 senkrecht oder im Wesentlichen senkrecht zur ersten Oberfläche FA11 angeordnet ist;
wobei die Drehachse der zweiten Trennvorrichtung T12 senkrecht oder im Wesentlichen senkrecht zur zweiten Oberfläche FA12 angeordnet ist;
wobei die Drehachse der ersten Trennvorrichtung T11 mit dem Flüssigkeitsspiegel einer in die Aufnahmeeinrichtung AG eingefüllten Flüssigkeit oder mit der Horizontalen einen Winkel mit einem Betrag von 0 bis 10 °, insbesondere 0 bis 5 °, einschließt;
wobei die Drehachse der zweiten Trennvorrichtung T12 mit dem Flüssigkeitsspiegel einer in die Aufnahmeeinrichtung AG eingefüllten Flüssigkeit oder mit der Horizontalen einen Winkel mit einem Betrag von 0 bis 10 °, insbesondere 0 bis 5 °, einschließt; wobei die erste Trennvorrichtung T11 und die zweite Trennvorrichtung T12 diese derart in der Vorrichtung V angeordnet sind, dass der Normalabstand zwischen der ersten Oberfläche FA11 der ersten Trennvorrichtung T11 und der zweiten Oberfläche FA12 der zweiten Trennvorrichtung T12 von 5 bis 25 cm, vorzugsweise 10 bis 30 cm, insbesondere 10 bis 20 cm, ist; und
wobei die erste Trennvorrichtung T11 und die zweite Trennvorrichtung T12 jeweils derart zur Aufnahmeeinrichtung AG angeordnet ist, dass während des Betriebs der Vorrichtung V zum Trennen der Maische MA die erste Oberfläche FA11 und die zweite Oberfläche FA12 jeweils zu einem Anteil von 1 bis 95 %, vorzugsweise 5 bis 25 %, vorzugsweise 5 bis 20 %, vorzugsweise 5 bis 15 %, vorzugsweise 5 bis 10 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische MA bedeckt sind oder in die Maische MA eintauchen, wenn die Maische MA in der Aufnahmeeinrichtung AG vorhanden ist; und
wobei die erste Oberfläche (FA11) und die zweite Oberfläche FA12 jeweils im Umfang des restlichen Anteils in einen gasgefüllten Raum GR oberhalb der Maische MA angeordnet sind oder darin hineinragen;
wobei die erste Oberfläche FA11 und die zweite Oberfläche FA12 oder ein Teil derselben mit der Maische MA in Kontakt bringbar ist, wenn die Maische MA zum Trennen in die Würze WO und die Restmaische RM in der Aufnahmeeinrichtung AG vorhanden ist;
wobei die erste Oberfläche FA11 und die zweite Oberfläche FA12 während des Betriebs der Vorrichtung V zur Maische MA, zur Restmaische RM und/oder zur Aufnahmeeinrichtung AG relativ beweglich oder bewegbar oder drehbar angeordnet sind.

In einer bevorzugten Ausführungsform ist die erfindungsgemäße Vorrichtung als eine Vorrichtung zur kontinuierlichen oder diskontinuierlichen Behandlung eines Mediums M, vorzugsweise zum Abtrennen von Feststoffen aus dem Medium M, in der Bierbrauerei oder Getränkeindustrie ausgebildet, wobei das Medium M eine Würze, vorzugsweise eine Läuterwürze, Pfannevoll-Würze, Ausschlagwürze, kalte Würze, gehopfte Würze; oder ein Bier, vorzugsweise ein Grünbier, Jungbier, teil- oder endvergorenes Bier, oder ein sonstiges alkoholhaltiges oder alkoholfreies Getränk, vorzugsweise ein Getränk auf Würzebasis oder ein Biermischgetränk; oder einer Vorstufe derselben ist;
wobei die Oberfläche FA oder ein Teil derselben mit dem Medium M in Kontakt bringbar ist, wenn das Medium M in der Aufnahmeeinrichtung AG vorhanden ist;
wobei die Oberfläche FA während des Betriebs der Vorrichtung V zum Medium M, zu einer der resultierenden Fraktionen und/oder zur Aufnahmeeinrichtung AG relativ beweglich oder bewegbar oder drehbar angeordnet ist.

Die erfindungsgemäße Aufgabe wird ferner gelöst durch das erfindungsgemäße System nach Anspruch 5. Das erfindungsgemäße System weist eine erste Vorrichtung V1 auf, wobei die erste Vorrichtung V1 eine erfindungsgemäße Vorrichtung ist. Vorzugsweise ist die erste Vorrichtung V1 mittels einer ersten Steuervorrichtung C1 derart steuerbar ist, dass eine relative Bewegung oder Drehbewegung der ersten Oberfläche FA11 und der zweiten Oberfläche FA12 während der gesamten Dauer des Trennens der Maische MA erfolgt.

Ferner kann das erfindungsgemäße System dadurch gekennzeichnet sein, dass die erste Trennvorrichtung T11 und die zweite Trennvorrichtung T12 derart zur ersten Aufnahmeeinrichtung AG1 angeordnet sind, dass während des Betriebs der ersten Vorrichtung V1 zum Trennen der Maische MA die erste Oberfläche FA11 und die zweite Oberfläche FA12 jeweils zu einem Anteil von 1 bis 95 %, vorzugsweise 5 bis 25 %, vorzugsweise 5 bis 20 %, vorzugsweise 5 bis 15 %, vorzugsweise 5 bis 10 %, vorzugsweise 5 bis 95 %, von der Maische (MA) bedeckt sind oder in die Maische MA eintaucht, wenn die Maische MA in der ersten Aufnahmeeinrichtung AG1 vorhanden ist; und
die erste Oberfläche FA11 und die zweite Oberfläche FA12 jeweils im Umfang des restlichen Anteils vorzugsweise in einem ersten gasgefüllten Raum GR1 oberhalb der Maische MA angeordnet sind oder darin hineinragen.

Ferner kann das erfindungsgemäße System dadurch gekennzeichnet sein, dass es ferner aufweist:
eine zweite Vorrichtung V2, wobei die zweite Vorrichtung V2 eine erfindungsgemäße Vorrichtung V ist;
wobei die zweite Vorrichtung V2 einer erste Trennvorrichtung T21 und eine zweite Trennvorrichtung T22 aufweist;
wobei die erste Trennvorrichtung T21 eine erste Oberfläche FA21 aufweist;
wobei die zweite Trennvorrichtung T22 eine erste Oberfläche FA22 aufweist;
wobei die zweite Vorrichtung V2 mittels einer zweiten Steuervorrichtung C2 vorzugsweise derart steuerbar ist, dass die relative Bewegung der ersten Oberfläche FA21 und der zweiten Oberfläche FA22 während der gesamten Dauer des Trennens der ersten Restmaische RM1 erfolgt; und
wobei das System vorzugsweise eine erste Einrichtung WZ1 zum Zuführen von Wasser oder einer verdünnten Würze, vorzugsweise einer dritten Würze WO3, aufweist.

Ferner kann das erfindungsgemäße System dadurch gekennzeichnet sein, dass die erste Trennvorrichtung T21 und die zweite Trennvorrichtung T22 der zweiten Vorrichtung V2 derart zur zweiten Aufnahmeeinrichtung AG2 angeordnet ist, dass die erste Oberfläche FA21 der ersten Trennvorrichtung T21 und die zweite Oberfläche FA22 der zweiten Trennvorrichtung T22 während des Betriebs der zweiten Vorrichtung V2 zum Trennen der ersten Restmaische RM1 zu einem Anteil von 1 bis 95 %, vorzugsweise 5 bis 95, vorzugsweise 5 bis 25 %, vorzugsweise 5 bis 20 %, vorzugsweise 5 bis 15 %, insbesondere 5 bis 10 % von der ersten Restmaische RM1 bedeckt sind oder in die erste Restmaische RM1 eintauchen, wenn die erste Restmaische (RM1) in der zweiten Aufnahmeeinrichtung AG2 vorhanden ist; und
der restliche Anteil der ersten Oberfläche FA21 und der zweiten Oberfläche FA22 jeweils vorzugsweise in einem zweiten gasgefüllten Raum GR2 angeordnet sind oder darin hineinragen, wobei der zweite gasgefüllten Raum GR2 über oder oberhalb der ersten Restmaische RM1 angeordnet ist.

Ferner kann das erfindungsgemäße System dadurch gekennzeichnet sein, dass es ferner aufweist:
eine dritte Vorrichtung V3, wobei die dritte Vorrichtung V3 eine erfindungsgemäße Vorrichtung V ist;
wobei die dritte Vorrichtung V3 eine dritte Aufnahmeeinrichtung AG3, vorzugsweise ein Aufnahmegefäß, zum Aufnehmen der zweiten Restmaische RM2 oder eines Gemischs enthaltend die zweite Restmaische RM2, aufweist;
wobei die dritte Vorrichtung V3 wenigstens eine dritte Trennvorrichtung T3 mit einer dritten Oberfläche FA3 aufweist;
wobei die dritte Oberfläche FA3 eine Vielzahl von Öffnungen OP aufweist;
wobei die dritte Vorrichtung V3 vorzugsweise geeignet ist, mittels der dritten Oberfläche FA3 der dritten Trennvorrichtung T3 eine zweite Restmaische RM2 in eine dritte Würze WO3, insbesondere einen zweiten Nachguss NG2, und eine dritte Restmaische RM3 kontinuierlich oder diskontinuierlich zu trennen;
wobei die dritte Oberfläche FA3 mit der zweiten Restmaische RM2 in Kontakt bringbar ist, wenn die zweite Restmaische RM2 zum Trennen in die dritte Würze WO3 und die dritte Restmaische RM3 in der dritten Aufnahmeeinrichtung AG3 vorhanden ist;
wobei die dritte Oberfläche FA3 während des Betriebs der dritten Vorrichtung V3 zur zweiten Restmaische RM2, zur dritten Restmaische RM3 und/oder zur dritten Aufnahmeeinrichtung AG3 relativ beweglich oder bewegbar oder drehbar angeordnet ist; und
wobei die dritte Vorrichtung V3, insbesondere die dritte Trennvorrichtung T3, mittels einer dritten Steuervorrichtung C3 vorzugsweise derart steuerbar ist, dass die relative Bewegung der dritten Oberfläche FA3 während der gesamten Dauer des Trennens der zweiten Restmaische RM2 ununterbrochen oder zeitweise, insbesondere in regelmäßigen zeitlichen Intervallen, erfolgt; und
wobei das System, vorzugsweise die dritte Vorrichtung V3, vorzugsweise eine zweite Einrichtung WZ2 zum Zuführen von Wasser oder einer verdünnten Würze, vorzugsweise einer vierten Würze WO4, aufweist.

Dabei kann die dritte Trennvorrichtung T3 derart zur dritten Aufnahmeeinrichtung AG3 angeordnet sein, dass die dritte Oberfläche FA3 während des Betriebs der dritten Vorrichtung V3 zum Trennen der zweiten Restmaische RM2 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 % von der zweiten Restmaische RM2 bedeckt ist oder in die zweite Restmaische RM2 eintaucht, wenn die zweite Restmaische RM2 in der dritten Aufnahmeeinrichtung AG3 vorhanden ist; und
der restliche Anteil der dritten Oberfläche FA3 vorzugsweise in einem dritten gasgefüllten Raum GR3 angeordnet sein oder darin hineinragen, wobei der dritte gasgefüllten Raum GR3 über oder oberhalb der zweiten Restmaische RM2 angeordnet ist.

Ferner kann das erfindungsgemäße System dadurch gekennzeichnet sein, dass es ferner aufweist:
eine vierte Vorrichtung V4, wobei die vierte Vorrichtung V4 eine erfindungsgemäße Vorrichtung V ist;
wobei die vierte Vorrichtung V4 eine vierte Aufnahmeeinrichtung AG4, vorzugsweise ein Aufnahmegefäß, zum Aufnehmen der dritten Restmaische RM3 oder eines Gemischs enthaltend die dritte Restmaische RM3, aufweist;
wobei die vierte Vorrichtung V4 wenigstens eine vierte Trennvorrichtung T4 mit einer vierten Oberfläche FA4 aufweist;
wobei die vierte Oberfläche FA4 eine Vielzahl von Öffnungen OP aufweist;
wobei die vierte Vorrichtung V4 vorzugsweise geeignet ist, mittels der vierten Oberfläche FA4 der vierten Trennvorrichtung T4 eine dritte Restmaische RM3 in eine vierte Würze WO4, insbesondere einen dritten Nachguss NG3, und eine vierte Restmaische RM4, insbesondere Treber, kontinuierlich oder diskontinuierlich zu trennen;
wobei die vierte Oberfläche FA4 mit der dritten Restmaische RM3 in Kontakt bringbar ist, wenn die dritte Restmaische RM3 zum Trennen in die vierte Würze WO4 und die vierte Restmaische RM4 in der vierten Aufnahmeeinrichtung AG4 vorhanden ist;
wobei die vierte Oberfläche FA4 während des Betriebs der vierten Vorrichtung V4 zur dritten Restmaische RM3, zur vierten Restmaische RM4 und/oder zur vierten Aufnahmeeinrichtung AG4 relativ beweglich oder bewegbar oder drehbar angeordnet ist; und
wobei die vierte Vorrichtung V4, insbesondere der vierte Trennvorrichtung T4, mittels einer vierten Steuervorrichtung C4 vorzugsweise derart steuerbar ist, dass die relative Bewegung der vierten Oberfläche FA4 während der gesamten Dauer des Trennens der dritten Restmaische RM3 ununterbrochen oder zeitweise, insbesondere in regelmäßigen zeitlichen Intervallen, erfolgt; und
wobei das System, vorzugsweise die vierte Vorrichtung V4, vorzugsweise wenigstens eine dritte Einrichtung WZ3 zum Zuführen von Wasser oder einer verdünnten Würze, aufweist.

Dabei kann die vierte Trennvorrichtung T4 derart zur vierten Aufnahmeeinrichtung AG4 angeordnet sein, dass die vierte Oberfläche FA4 während des Betriebs der vierten Vorrichtung V4 zum Trennen der dritten Restmaische RM3 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, insbesondere 5 bis 10 % von der dritten Restmaische RM3 bedeckt ist oder in die dritte Restmaische RM3 eintaucht, wenn die dritte Restmaische RM3 in der vierten Aufnahmeeinrichtung AG4 vorhanden ist; und
der restliche Anteil der vierten Oberfläche FA4 vorzugsweise in einem vierten gasgefüllten Raum GR4 angeordnet ist oder darin hineinragt, wobei der vierte gasgefüllten Raum GR4 über oder oberhalb der dritten Restmaische RM3 angeordnet ist.

Ferner kann das erfindungsgemäße System dadurch gekennzeichnet sein, dass das System eine erste Einrichtung WZ1, eine zweite Einrichtung WZ2 und/oder eine dritte Einrichtung WZ3 jeweils zum Zuführen von Wasser oder einer verdünnten Würze aufweist; und
wobei die erste Einrichtung WZ 1 vorzugsweise derart im System angeordnet ist, dass das Wasser oder die verdünnte Würze der Maische oder der ersten Restmaische RM1 in der ersten Vorrichtung V1 und/oder stromabwärts zur ersten Vorrichtung V1 und stromaufwärts zur zweiten Vorrichtung V2 und/oder in der zweiten Vorrichtung V2, zugeführt wird; und/oder
wobei die zweite Einrichtung WZ2 vorzugsweise derart im System angeordnet ist, dass das Wasser oder die verdünnte Würze der zweiten Restmaische RM2 in der zweiten Vorrichtung V2 und/oder stromabwärts zur zweiten Vorrichtung V2 und stromaufwärts zur dritten Vorrichtung V3 und/oder in der dritten Vorrichtung V3 zugeführt wird; und/oder
wobei die dritte Einrichtung WZ3 vorzugsweise derart im System angeordnet ist, dass das Wasser oder die verdünnte Würze einer dritten Restmaische RM3 in der dritten Vorrichtung V3 und/oder stromabwärts zur dritten Vorrichtung V3 und stromaufwärts zu einer vierten Vorrichtung V4 und/oder in der vierten Vorrichtung V4 zugeführt wird.

Ferner kann das erfindungsgemäße System dadurch gekennzeichnet sein, dass die erste Einrichtung WZ1, die zweite Einrichtung WZ2 und/oder die dritte Einrichtung WZ3 jeweils als Auslassöffnung, vorzugsweise als Düse, insbesondere als Flachstrahldüse, Sprühkopf, oder Sprühkugel, ausgebildet sind.

Ferner kann das erfindungsgemäße System dadurch gekennzeichnet sein, dass wenigstens eine Trennvorrichtung T, ausgewählt aus der Gruppe, bestehend aus der ersten Trennvorrichtung T1, der zweiten Trennvorrichtung T2, der dritten Trennvorrichtung T3 und der vierten Trennvorrichtung T4, als eine Trennvorrichtung mit einer drehbar gelagerten Trenn- oder Filterfläche, insbesondere mit einer drehbar gelagerten Oberfläche (FA1, FA2, FA3, FA4), oder als drehbar gelagerte Trennvorrichtung oder drehbar gelagertes Filter ausgeführt ist; und/oder
wenigstens eine Trennvorrichtung T, ausgewählt aus der Gruppe bestehend aus der ersten Trennvorrichtung T1, der zweiten Trennvorrichtung T2, der dritten Trennvorrichtung T3 und der vierten Trennvorrichtung T4, in scheibenförmiger oder zylindrischer Gestalt, oder in im Wesentlichen scheibenförmiger oder zylindrischer Gestalt ausgebildet ist; und/oder
wobei die Grundfläche und/oder die Mantelfläche der Trennvorrichtung oder eines Teils der Trennvorrichtung teilweise oder vollständig als Trenn- oder Filterfläche, insbesondere als die Oberfläche (FA1, FA2, FA3, FA4), ausgebildet ist; und/oder
wobei die wenigstens eine Trennvorrichtung T, ausgewählt aus der Gruppe bestehend aus der ersten Trennvorrichtung T1, der zweiten Trennvorrichtung T2, der dritten Trennvorrichtung T3 und der vierten Trennvorrichtung T4, derart im System angeordnet ist, dass die Mittelachse oder eine Drehachse der Trennvorrichtung im Wesentlichen parallel zum Flüssigkeitsspiegel einer in die jeweiligen Aufnahmeeinrichtung (AG1, AG2, AG3, AG4) der jeweiligen Vorrichtung (V1, V2, V3, V4) eingefüllten Flüssigkeit angeordnet ist oder die Mittelachse oder eine Drehachse der Trennvorrichtung T oder seiner jeweiligen Oberfläche (FA1, FA2, FA3, FA4) mit dem Flüssigkeitsspiegel einer in die jeweilige Aufnahmeeinrichtung (AG1, AG2, AG3, AG4) der jeweiligen Vorrichtung (V1, V2, V3, V4) eingefüllten Flüssigkeit oder mit der Horizontalen einen Winkel mit einem Betrag im Bereich von 0 bis < 90 °, vorzugsweise 0 bis 45 °, vorzugsweise 0 bis 30°, vorzugsweise 0 bis 20°, vorzugsweise 0 bis 15 °, vorzugsweise 0 bis 10 °, insbesondere 0 bis 5 °, einschließt.

Ferner kann das erfindungsgemäße System dadurch gekennzeichnet sein, dass die Öffnungen OP eine Größe oder Porengröße oder Maschenweite im Bereich von 5 bis 10.000 µm, vorzugsweise 10 bis 1.000 µm, vorzugsweise 10 bis 500 µm, vorzugsweise 20 bis 400 µm, vorzugsweise 25 bis 500 µm, vorzugsweise 30 bis 300 µm, vorzugsweise 40 bis 250 µm, vorzugsweise 45 bis 350 µm, vorzugsweise 45 bis 200 µm, vorzugsweise 55 bis 300 µm, vorzugsweise 45 bis 100 µm, insbesondere 65 bis 250 µm, aufweisen.

Ferner kann das erfindungsgemäße System dadurch gekennzeichnet sein, dass die relative Bewegung oder Drehbewegung der ersten Oberfläche FA1, der zweiten Oberfläche FA2, der dritten Oberfläche FA3 und/oder der vierten Oberfläche FA4 ununterbrochen oder zeitweise, insbesondere in regelmäßigen zeitlichen Intervallen, erfolgt.

Ferner kann das erfindungsgemäße System dadurch gekennzeichnet sein, dass während des Betriebs der ersten Vorrichtung V1 zum Trennen der Maische MA die erste Oberfläche FA1 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische MA bedeckt ist oder in die Maische MA eintaucht.

Ferner kann das erfindungsgemäße System dadurch gekennzeichnet sein, dass die zweite Oberfläche FA2 während des Betriebs der zweiten Vorrichtung V2 zum Trennen der ersten Restmaische RM1 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der ersten Restmaische RM1 bedeckt ist oder in die erste Restmaische RM1 eintaucht.

Ferner kann das erfindungsgemäße System dadurch gekennzeichnet sein, dass die dritte Oberfläche FA3 während des Betriebs der dritten Vorrichtung V3 zum Trennen der zweiten Restmaische RM2 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der zweiten Restmaische RM2 bedeckt ist oder in die zweite Restmaische RM2 eintaucht.

Ferner kann das erfindungsgemäße System dadurch gekennzeichnet sein, dass die vierte Oberfläche FA4 während des Betriebs der vierten Vorrichtung V4 zum Trennen der dritten Restmaische RM3 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 20 bis 90 %, vorzugsweise 30 bis 80 %, vorzugsweise 35 bis 70 %, insbesondere 40 bis 60 %, von der dritten Restmaische RM3 bedeckt ist oder in die dritte Restmaische RM3 eintaucht.

Ferner kann das erfindungsgemäße System dadurch gekennzeichnet sein, dass zwei, drei, vier oder mehr, vorzugsweise bis zu zehn, Vorrichtungen, ausgewählt aus der Gruppe, bestehend aus der ersten Vorrichtung V1, der zweiten Vorrichtung V2, der dritten Vorrichtung V3 und der vierten Vorrichtung V4, in Serie oder parallel geschaltet sind.

Ferner kann das erfindungsgemäße System dadurch gekennzeichnet sein, dass zwei, drei, vier oder mehr erste Vorrichtungen V1 parallel geschaltet sind; und/oder zwei, drei, vier oder mehr zweite Vorrichtungen V2 parallel geschaltet sind; und/oder zwei, drei, vier oder mehr dritte Vorrichtungen V3 parallel geschaltet sind; und/oder zwei, drei, vier oder mehr vierte Vorrichtungen V4 parallel geschaltet sind; und die ersten Vorrichtungen V1, die zweiten Vorrichtungen V2, die dritten Vorrichtungen V3 und/oder die vierte Vorrichtungen V4 in Serie geschaltet sind.

Ferner kann das erfindungsgemäße System dadurch gekennzeichnet sein, dass das System wenigstens einen Strömungsweg ausbildet; und
der wenigstens eine Strömungsweg von einer Flüssigkeit oder insbesondere der Maische, der ersten Restmaische RM1, der zweiten Restmaische RM2, der dritten Restmaische RM3 und/oder der vierten Restmaische RM4 vorzugsweise schwerkraftgetrieben durchströmbar ist.

Ferner kann das erfindungsgemäße System dadurch gekennzeichnet sein, dass das System wenigstens ein Stauelement aufweist;
wobei vorzugsweise ein erstes Stauelement stromabwärts zur ersten Vorrichtung V1 und stromaufwärts zur zweiten Vorrichtung V2 angeordnet ist; und/oder
wobei vorzugsweise ein zweites Stauelement stromabwärts zur zweiten Vorrichtung V2 und stromaufwärts zur dritten Vorrichtung V3 angeordnet ist; und/oder
wobei vorzugsweise ein drittes Stauelement stromabwärts zur dritten Vorrichtung V3 und stromaufwärts zur vierten Vorrichtung V4 angeordnet ist.

Ferner kann das erfindungsgemäße System ein System zur kontinuierlichen oder diskontinuierlichen Behandlung eines Mediums M, vorzugsweise zum kontinuierlichen oder diskontinuierlichen Abtrennen von Feststoffen aus dem Medium M, in der Bierbrauerei oder Getränkeindustrie sein, wobei das Medium M eine Würze, vorzugsweise eine Läuterwürze, Pfannevoll-Würze, Ausschlagwürze, kalte Würze, gehopfte Würze; oder ein Bier, vorzugsweise ein Grünbier, Jungbier, teil- oder endvergorenes Bier, oder ein sonstiges alkoholhaltiges oder alkoholfreies Getränk, vorzugsweise ein Getränk auf Würzebasis oder ein Biermischgetränk; oder einer Vorstufe derselben ist;
das System wenigstens mit:
wenigstens einer ersten Vorrichtung V1, wobei die erste Vorrichtung V1 eine erfindungsgemäße Vorrichtung V ist;
wobei die erste Vorrichtung V1 eine erste Aufnahmeeinrichtung AG1 zum Aufnehmen des Mediums M, aufweist;
wobei die erste Vorrichtung V1 wenigstens eine erste Trennvorrichtung T1 mit einer ersten Oberfläche FA1 aufweist;
wobei die erste Oberfläche FA1 eine Vielzahl von Öffnungen OP aufweist;
wobei die erste Vorrichtung V1 vorzugsweise geeignet ist, mittels der ersten Oberfläche FA1 der ersten Trennvorrichtung T1 das Medium M in zwei Fraktionen kontinuierlich oder diskontinuierlich zu trennen;
wobei die erste Oberfläche FA1 mit dem Medium M in Kontakt bringbar ist, wenn das Medium M in der ersten Aufnahmeeinrichtung AG1 vorhanden ist;
wobei die erste Oberfläche FA1 während des Betriebs der ersten Vorrichtung V1 zum Medium M, zu einer der resultierenden Fraktionen und/oder zur Aufnahmeeinrichtung AG relativ beweglich oder bewegbar oder drehbar angeordnet ist; und
wobei die erste Vorrichtung V1, insbesondere die erste Trennvorrichtung T1, mittels einer ersten Steuervorrichtung C1 vorzugsweise derart steuerbar ist, dass eine relative Bewegung oder Drehbewegung der ersten Oberfläche FA1 während der gesamten Dauer des Trennens das Medium M erfolgt.

Die erfindungsgemäße Aufgabe wird ferner durch das erfindungsgemäße Verfahren nach Anspruch 12 gelöst. Dabei weist das erfindungsgemäße Verfahren die Schritte auf:
(a) Zuführen einer Maische MA zu einer ersten Aufnahmeeinrichtung AG1 einer ersten Vorrichtung V1, wobei die erste Vorrichtung V1 eine erfindungsgemäße Vorrichtung ist;
(b) Trennen der Maische MA in der ersten Vorrichtung V1 mittels einer ersten Trennvorrichtung T1 in eine erste Würze WO1 und eine erste Restmaische RM1, mittels Trennen oder Filtrieren der Maische MA unter Zuhilfenahme der ersten Oberfläche FA11 der ersten Trennvorrichtung T11 und der zweiten Oberfläche FA12 der zweiten Trennvorrichtung T12 der ersten Vorrichtung V1;
   wobei das Filtrat oder Permeat die erste Würze WO1 und der Filterrückstand oder Retentat die erste Restmaische RM1 ist;
   wobei das Trennen durch den hydrostatischen Druck der Maische MA und/oder einen anderen auf die Maische MA einwirkenden Druck und/oder einen auf die erste Restmaische RM1 einwirkenden Unterdruck angetrieben wird;
   wobei sich während des Trennens der Maische MA in die erste Würze WO1 und die erste Restmaische RM1 die erste Oberfläche FA11 und die zweite Oberfläche FA12 jeweils zur in der ersten Vorrichtung V1 vorhandenen Maische MA, zur in der ersten Vorrichtung V1 vorhandenen, ersten Restmaische RM1 und/oder zur ersten Aufnahmeeinrichtung AG1 relativ bewegt oder die erste Oberfläche FA11 sich während des Trennens der Maische MA um eine erste Achse AX11 der ersten Trennvorrichtung T11 der ersten Vorrichtung V1 dreht und die zweite Oberfläche FA12 sich während des Trennens der Maische MA um eine zweite Achse AX21 der zweiten Trennvorrichtung T12 der ersten Vorrichtung V1 dreht; und
   wobei die relative Bewegung oder die Drehbewegung der ersten Oberfläche FA11 und der zweiten Oberfläche FA12 während der gesamten Dauer des Trennens der Maische MA ununterbrochen oder zeitweise, vorzugsweise in regelmäßigen zeitlichen Intervallen, erfolgt.

Das erfindungsgemäße Verfahren kann ferner die nachfolgenden Schritte aufweisen:
(c) Mischen von Wasser oder einer verdünnten Würze, vorzugsweise der dritten Würze WO3, mit der bei der Trennung gemäß Schritt (b) erhaltenen ersten Restmaische RM1 in einem vordefinierten Volumenstromverhältnis, wobei ein erstes Gemisch MX1 erhalten wird;
(d) vor Schritt (c): kontinuierliches oder diskontinuierliches Zuführen der ersten Restmaische RM1 zur zweiten Aufnahmeeinrichtung AG2 der zweiten Vorrichtung V2; oder
   nach Schritt (c): kontinuierliches oder diskontinuierliches Zuführen des ersten Gemischs MX1 zur zweiten Aufnahmeeinrichtung AG2 der zweiten Vorrichtung V2;
   wobei die zweite Vorrichtung V2 eine erfindungsgemäße Vorrichtung ist;
(e) Trennen des so erhaltenen ersten Gemischs MX1 in eine zweite Würze WO2 und eine zweite Restmaische RM2, mittels einer ersten Trennvorrichtung T21 und einer zweiten Trennvorrichtung T22 der zweiten Vorrichtung V oder mittels Trennen oder Filtrieren des ersten Gemischs MX1 unter Zuhilfenahme der ersten Oberfläche FA21 der ersten Trennvorrichtung T21 und der zweiten Oberfläche FA22 der zweiten Trennvorrichtung T22 in der zweiten Vorrichtung V2;
   wobei das Filtrat oder Permeat die zweite Würze WO2 und der Filterrückstand oder das Retentat die zweite Restmaische RM2 ist;
   wobei das Trennen durch den hydrostatischen Druck des ersten Gemischs MX1 und/oder einen anderen auf das erste Gemisch MX1 einwirkenden Druck und/oder einen auf die zweite Restmaische RM2 einwirkenden Unterdruck angetrieben wird;
   wobei sich während des Trennens des ersten Gemischs MX1 in die zweite Würze WO2 und die zweite Restmaische RM2 die erste Oberfläche FA21 der ersten Trennvorrichtung T21 und die zweite Oberfläche FA22 der zweiten Trennvorrichtung T22 der zweiten Vorrichtung V2 relativ zu dem in der zweiten Vorrichtung V2 vorhandenen ersten Gemisch MX1, zur in der zweiten Vorrichtung V2 vorhandenen, zweiten Restmaische RM2 und/oder zur zweiten Aufnahmeeinrichtung AG2 bewegt oder
   sich während des Trennens des ersten Gemischs MX1 in die zweite Würze WO2 und die zweite Restmaische RM2 die erste Oberfläche FA21 der ersten Trennvorrichtung T21 der zweiten Vorrichtung V2 um eine erste Achse AX21 der ersten Trennvorrichtung T21 der zweiten Vorrichtung V2 und die zweite Oberfläche FA22 der zweiten Trennvorrichtung T22 der zweiten Vorrichtung V2 um eine zweite Achse AX22 der zweiten Trennvorrichtung T22 der zweiten Vorrichtung V2 dreht; und
   wobei die relative Bewegung oder die Drehbewegung der ersten Oberfläche FA21 und der zweiten Oberfläche FA22 während der gesamten Dauer des Trennens des ersten Gemischs MX1 ununterbrochen oder zeitweise, vorzugsweise in regelmäßigen zeitlichen Intervallen, erfolgt.

Darüber hinaus kann das erfindungsgemäße Verfahren ferner die nachfolgenden Schritte aufweisen:
(f) Mischen von Wasser oder einer verdünnten Würze, vorzugsweise der vierten Würze WO4, mit der bei der Trennung gemäß Schritt (e) erhaltenen zweiten Restmaische RM2 in einem vordefinierten Volumenstromverhältnis, wobei ein zweites Gemisch MX2 erhalten wird;
(g) vor Schritt (f): kontinuierliches oder diskontinuierliches Zuführen der zweiten Restmaische RM2 zur dritten Aufnahmeeinrichtung AG3 der dritten Vorrichtung V3; oder
   nach Schritt (f): kontinuierliches oder diskontinuierliches Zuführen des zweiten Gemischs MX2 zur dritten Aufnahmeeinrichtung AG3 der dritten Vorrichtung V3;
   wobei die dritte Vorrichtung V3 eine erfindungsgemäße Vorrichtung ist;
(h) kontinuierliches oder diskontinuierliches Trennen des so erhaltenen zweiten Gemischs MX2 in eine dritte Würze WO3 und eine dritte Restmaische RM3, mittels einer dritten Trennvorrichtung T3 oder mittels Trennen oder Filtrieren des zweiten Gemischs MX2 unter Zuhilfenahme einer dritten Oberfläche FA3 der dritten Trennvorrichtung T3 in der dritten Vorrichtung V3;
   wobei das Filtrat oder Permeat die dritte Würze WO3 und der Filterrückstand oder das Retentat die dritte Restmaische RM3 ist;
   wobei das Trennen durch den hydrostatischen Druck des zweiten Gemischs MX2 und/oder einen anderen auf das zweite Gemisch MX2 einwirkenden Druck und/oder einen auf die dritte Restmaische RM3 einwirkenden Unterdruck angetrieben wird;
   wobei sich während des Trennens des zweiten Gemischs MX2 in die dritte Würze WO3 und die dritte Restmaische RM3 die dritte Oberfläche FA3 zum in der dritten Vorrichtung V3 vorhandenen zweiten Gemisch MX2, zur in der dritten Vorrichtung V3 vorhandenen, dritten Restmaische RM3 und/oder zur dritten Aufnahmeeinrichtung AG3 relativ bewegt, oder
   sich während des Trennens des zweiten Gemischs MX2 in die dritte Würze WO3 und die dritte Restmaische RM3 die dritte Oberfläche FA3 um eine dritte Achse AX3 der dritten Trennvorrichtung T3 dreht; und
   wobei die relative Bewegung oder die Drehbewegung der dritten Oberfläche FA3 während der gesamten Dauer des Trennens des zweiten Gemischs MX2 ununterbrochen oder zeitweise, vorzugsweise in regelmäßigen zeitlichen Intervallen, erfolgt.

Darüber hinaus kann das erfindungsgemäße Verfahren ferner die nachfolgenden Schritte aufweisen:
(i) Mischen von Wasser oder einer verdünnten Würze mit der bei der Trennung gemäß Schritt (h) erhaltenen dritten Restmaische RM3 in einem vordefinierten Volumenstromverhältnis, wobei ein drittes Gemisch MX3 erhalten wird;
(j) vor Schritt (i): kontinuierliches oder diskontinuierliches Zuführen der dritten Restmaische RM3 zu einer vierten Aufnahmeeinrichtung AG4 der vierten Vorrichtung V4; oder
   nach Schritt (i): kontinuierliches oder diskontinuierliches Zuführen des dritten Gemischs MX3 zur vierten Aufnahmeeinrichtung AG4 der vierten Vorrichtung V4;
   wobei die vierte Vorrichtung V4 eine erfindungsgemäße Vorrichtung ist;
(k) kontinuierliches oder diskontinuierliches Trennen des so erhaltenen dritten Gemischs MX3 in eine vierte Würze WO4 und eine vierte Restmaische RM4, durch mittels einer vierten Trennvorrichtung T4 oder mittels Trennen oder Filtrieren des dritten Gemischs MX3 unter Zuhilfenahme einer vierten Oberfläche FA4 der vierten Trennvorrichtung T4 in der vierten Vorrichtung V4;
   wobei das Filtrat oder Permeat die vierte Würze WO4 und der Filterrückstand oder das Retentat die vierte Restmaische RM4 oder der Treber SP ist;
   wobei das Trennen durch den hydrostatischen Druck des dritten Gemischs MX3 und/oder einen anderen auf das dritte Gemisch MX3 einwirkenden Druck und/oder einen auf die vierte Restmaische RM4 einwirkenden Unterdruck angetrieben wird;
   wobei sich während des Trennens des dritten Gemischs MX3 in die vierte Würze WO4 und die vierte Restmaische RM4 die vierte Oberfläche FA4 zum in der vierten Vorrichtung V4 vorhandenen dritten Gemisch MX3, zur in der vierten Vorrichtung V4 vorhandenen, vierten Restmaische RM4 und/oder zur vierten Aufnahmeeinrichtung AG) relativ bewegt, oder
   sich während des Trennens des dritten Gemischs MX3 in die vierte Würze WO4 und die vierte Restmaische RM4 die vierte Oberfläche FA4 um eine vierte Achse AX4 der vierten Trennvorrichtung T4 dreht; und
   wobei die relative Bewegung oder die Drehbewegung der vierten Oberfläche FA4 während der gesamten Dauer des Trennens des dritten Gemischs MX3 ununterbrochen oder zeitweise, vorzugsweise in regelmäßigen zeitlichen Intervallen, erfolgt.

Ferner kann das erfindungsgemäße Verfahren dadurch gekennzeichnet sein, dass die relative Bewegung eine Drehbewegung im oder gegen den Uhrzeigersinn, vorzugsweise gegen den Uhrzeigersinn, ist, wobei die Drehrichtung aus der Blickrichtung bestimmt wird, bei der das zu trennende, einströmende Medium, vorzugsweise die zu trennende Maische MA oder Restmaische (RM1, RM2, RM3) oder das Gemisch (MX1, MX2, MX3) von links in die Vorrichtung einströmt und die abzuführende Restmaische die Vorrichtung (V1, V2, V3, V4) nach rechts verlässt; und/oder
die relative Bewegung der ersten Oberfläche FA1, der zweiten Oberfläche FA2, der dritten Oberfläche FA3 und/oder der vierten Oberfläche FA4 mit einer Geschwindigkeit im Bereich von 0,01 bis 2,5 m/s, insbesondere 0,01 bis 1,8 m/s, erfolgt; und/oder
die Drehbewegung der ersten Oberfläche FA1, der zweiten Oberfläche FA2, der dritten Oberfläche FA3 und/oder der vierten Oberfläche FA4 mit einer Drehzahl im Bereich von 1 bis 60 U/min, vorzugsweise 1 bis 40 U/min, vorzugsweise 1 bis 30 U/min, vorzugsweise 1 bis 20 U/min, insbesondere 1 bis 12 U/min, erfolgt; und/oder
die Drehbewegung der ersten Oberfläche FA1, der zweiten Oberfläche FA2, der dritten Oberfläche FA3 und/oder der vierten Oberfläche FA4 mit einer Umfangsgeschwindigkeit oder Spitzengeschwindigkeit (tip velocity) im Bereich von 0,01 bis < 2,0 m/s, vorzugsweise 0,05 bis 1,8 m/s, vorzugsweise 0,1 bis 1,5 m/s, insbesondere 0,2 bis 1,5 m/s, erfolgt.

Ferner kann das erfindungsgemäße Verfahren dadurch gekennzeichnet sein, dass das Zuführen der Maische MA in Schritt (a), das Zuführen der ersten Restmaische RM1 oder des ersten Gemisches MX1 in Schritt (d), das Zuführen der zweiten Restmaische RM2 oder des zweiten Gemisches MX2 in Schritt (g) und/oder das Zuführen der dritten Restmaische RM3 oder des dritten Gemisches MX3 in Schritt (j) im Bereich von 0,25 bis < 2,0 m/s, vorzugsweise 0,3 bis 1,8 m/s, vorzugsweise 0,5 bis 1,5 m/s, insbesondere 0,8 bis 1,5 m/s, erfolgt.

Ferner kann das erfindungsgemäße Verfahren den Schritt aufweisen:
(l) Verwenden der ersten Würze WO1, der zweiten Würze WO2, der dritten Würze WO3 oder der vierten Würze WO4 zur Herstellung eines Biers, eines Biermischgetränks oder eines sonstigen Getränks.

Ferner kann das erfindungsgemäße Verfahren die Schritte aufweisen:
(m) Herstellen eines Gemischs aus wenigstens zwei beliebigen Würzen, insbesondere aus zwei, drei oder vier beliebigen Würzen, ausgewählt aus der Gruppe, bestehend aus der ersten Würze WO1, der zweiten Würze WO2, der dritten Würze WO3 und der vierten Würze WO4;
(n) Verwenden des in Schritt (j) resultierenden Gemischs WOMX zur Herstellung eines Biers, eines Biermischgetränks oder eines sonstigen Getränks.

Ferner kann das erfindungsgemäße Verfahren dadurch gekennzeichnet sein, dass während des Trennens der Maische MA der Kontakt der ersten Oberfläche FA1 oder einer Teilfläche derselben mit der in der ersten Aufnahmeeinrichtung AG1 vorhandenen Maische MA durch die Ausführung der relativen Bewegung oder Drehbewegung der ersten Oberfläche FA1 zeitweise unterbrochen und nach erfolgter Unterbrechung wiederhergestellt wird;
wobei das Unterbrechen und Wiederherstellen des Kontakts der ersten Oberfläche FA1 oder einer Teilfläche derselben mit der Maische MA vorzugsweise wiederholt wird.

Ferner kann das erfindungsgemäße Verfahren dadurch gekennzeichnet sein, dass während des Trennens der ersten Restmaische RM1 der Kontakt der zweiten Oberfläche FA2 oder einer Teilfläche derselben mit der in der zweiten Aufnahmeeinrichtung AG2 vorhandenen ersten Restmaische RM1 durch die Ausführung der relativen Bewegung oder Drehbewegung der zweiten Oberfläche FA2 zeitweise unterbrochen und nach erfolgter Unterbrechung wiederhergestellt wird;
wobei das Unterbrechen und Wiederherstellen des Kontakts der zweiten Oberfläche FA2 oder einer Teilfläche derselben mit der ersten Restmaische RM1 vorzugsweise wiederholt wird.

Ferner kann das erfindungsgemäße Verfahren dadurch gekennzeichnet sein, dass während des Trennens der zweiten Restmaische RM2 der Kontakt der dritten Oberfläche FA3 oder einer Teilfläche derselben mit der in der dritten Aufnahmeeinrichtung AG3 vorhandenen zweiten Restmaische RM2 durch die Ausführung der relativen Bewegung oder Drehbewegung der dritten Oberfläche FA) zeitweise unterbrochen und nach erfolgter Unterbrechung wiederhergestellt wird;
wobei das Unterbrechen und Wiederherstellen des Kontakts der dritten Oberfläche FA3 oder einer Teilfläche derselben mit der zweiten Restmaische RM2 vorzugsweise wiederholt wird.

Ferner kann das erfindungsgemäße Verfahren dadurch gekennzeichnet sein, dass während des Trennens der dritten Restmaische RM3 der Kontakt der vierten Oberfläche FA4 oder einer Teilfläche derselben mit der in der vierten Aufnahmeeinrichtung AG4 vorhandenen dritten Restmaische RM3 durch die Ausführung der relativen Bewegung oder Drehbewegung der vierten Oberfläche FA4 zeitweise unterbrochen und nach erfolgter Unterbrechung wiederhergestellt wird;
wobei das Unterbrechen und Wiederherstellen des Kontakts der vierten Oberfläche FA4 oder einer Teilfläche derselben mit der dritten Restmaische RM3 vorzugsweise wiederholt wird.

Ferner kann das erfindungsgemäße Verfahren dadurch gekennzeichnet sein, dass während des Trennens der Maische MA gemäß Schritt (b) die erste Oberfläche FA1 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische MA bedeckt ist oder in die Maische MA eintaucht, und
die erste Oberfläche FA1 im Umfang des restlichen Anteils vorzugsweise in einem ersten gasgefüllten Raum GR1 über oder oberhalb der Maische MA angeordnet ist oder darin hineinragt.

Ferner kann das erfindungsgemäße Verfahren dadurch gekennzeichnet sein, dass während des Trennens gemäß Schritt (e) die zweite Oberfläche FA2 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 15 bis 80 %, vorzugsweise 20 bis 80 %, vorzugsweise 20 bis 90 %, vorzugsweise 30 bis 80 %, vorzugsweise 35 bis 70 %, insbesondere 40 bis 60 %, vom ersten Gemisch MX1 bedeckt ist oder in das erste Gemisch MX1 eintaucht.

Ferner kann das erfindungsgemäße Verfahren dadurch gekennzeichnet sein, dass während des Trennens gemäß Schritt (h) die dritte Oberfläche FA3 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %, vorzugsweise 10 bis 90 %, vorzugsweise 20 bis 90 %, vorzugsweise 30 bis 80 %, vorzugsweise 35 bis 70 %, insbesondere 40 bis 60 %, vom zweiten Gemisch MX2 bedeckt ist oder in das zweite Gemisch MX2 eintaucht.

Ferner kann das erfindungsgemäße Verfahren dadurch gekennzeichnet sein, dass während des Trennens gemäß Schritt (k) die vierte Oberfläche FA4 zu einem Anteil im Bereich von 1 bis 95 %, vorzugsweise 5 bis 95 %, vorzugsweise 5 bis 25 %, vorzugsweise 5 bis 20 %, vorzugsweise 5 bis 15 %, vorzugsweise 5 bis 10 %,, vorzugsweise 10 bis 90 %, vorzugsweise 20 bis 90 %, vorzugsweise 30 bis 80 %, vorzugsweise 35 bis 70 %, insbesondere 40 bis 60 %, vom dritten Gemisch MX3 bedeckt ist oder in das dritte Gemisch MX3 eintaucht.

Ferner kann das erfindungsgemäße Verfahren dadurch gekennzeichnet sein, dass wenigstens ein Medium, ausgewählt aus der Gruppe, bestehend aus der Maische MA, der ersten Würze WO1, der zweiten Würze WO2, der dritten Würze WO3, der vierten Würze WO4, der ersten Restmaische RM1, der zweiten Restmaische RM2, der dritten Restmaische RM3, der vierten Restmaische RM4, des ersten Gemisches MX1, des zweiten Gemisches MX2 und des dritten Gemisches MX3, während wenigstens einer der Schritte (a, b, d, e, g, h, j und k) schwerkraftgetrieben, insbesondere nur schwerkraftgetrieben, bewegt wird.

Schließlich wird die erfindungsgemäße Aufgabe durch die Verwendung nach Anspruch 14 gelöst. Dabei wird eine erfindungsgemäße Vorrichtung oder ein erfindungsgemäßes System zur kontinuierlichen oder diskontinuierlichen Gewinnung einer Würze WO aus einer Maische MA in der Bierbrauerei oder Getränkeindustrie oder zur kontinuierlichen oder diskontinuierlichen Gewinnung einer verdünnten Würze aus einer Restmaische oder einem Treber oder einem Gemisch enthaltend Wasser und Restmaische oder Treber; oder
zum Hopfen einer Würze, eines Bieres, eines sonstigen alkoholhaltigen oder alkoholfreien Getränks oder einer Vorstufe derselben verwendet.

Die erfindungsgemäße Verwendung kann mindestens die Schritte aufweisen:
(a) Vorlegen einer vorbestimmten Menge eines Hopfens und/oder eines Hopfenprodukts in einer Aufnahmevorrichtung AG einer erfindungsgemäßen Vorrichtung V; oder
   kontinuierliches oder diskontinuierliches Zuführen einer vorbestimmten Menge eines Hopfens und/oder eines Hopfenprodukts zu einer Aufnahmevorrichtung AG einer erfindungsgemäßen Vorrichtung V;
(b) Mischen des Hopfens und/oder des Hopfenprodukts mit einem vordefinierten Volumen eines Mediums in der Aufnahmeeinrichtung AG, wobei ein Gemisch HX erhalten wird; und
(c) Trennen des so erhaltenen Gemisches HX in ein gehopftes Medium HM und in einen Rückstand R, vorzugsweise einen Hopfentreber, unter Zurhilfenahme der Trennvorrichtung T der erfindungsgemäßen Vorrichtung V.

Dabei kann die erfindungsgemäße Verwendung dadurch gekennzeichnet sein, dass eine vorbestimmte Menge eines Hopfens und/oder Hopfenprodukts in die Aufnahmeeinrichtung AG der Vorrichtung V vorgelegt wird; und
anschließend ein vorbestimmtes Volumen des zu hopfenden Mediums in die Aufnahmeeinrichtung AG eingebracht und mit dem Hopfen und/oder Hopfenprodukt gemischt wird; oder
ein vorbestimmtes Volumen des zu hopfenden Mediums in die Aufnahmeeinrichtung AG der Vorrichtung V vorgelegt wird; und
anschließend eine vorbestimmte Menge eines Hopfens und/oder Hopfenprodukts in die Aufnahmeeinrichtung AG eingebracht und mit dem Medium gemischt wird.

Zudem kann dabei die erfindungsgemäße Vorrichtung oder das erfindungsgemäße System zum teilweisen oder vollständigen Entfernen der Hopfenfeststoffpartikel aus dem Medium verwendet werden.

Des Weiteren wird die Verwendung einer Trennvorrichtung T wie vorstehend beschrieben, vorzugsweise eines Filters zur kontinuierlichen oder diskontinuierlichen Gewinnung einer Würze WO aus einer Maische MA in der Bierbrauerei oder Getränkeindustrie offenbart;
wobei die Trennvorrichtung T eine Oberfläche FA mit einer Vielzahl von Öffnungen mit einer Größe oder Porengröße oder Maschenweite im Bereich von 5 bis 10.000 µm, vorzugsweise 10 bis 1.000 µm, vorzugsweise 25 bis 500 µm, vorzugsweise 45 bis 350 µm, vorzugsweise 55 bis 300 µm, insbesondere 65 bis 250 µm, aufweist;
wobei während der Gewinnung der Würze die Oberfläche FA zur Maische relativ bewegt wird;
wobei während der Gewinnung der Würze die Oberfläche FA zu einem Anteil im Bereich von 1 bis 95 %, vorzugsweise 5 bis 20 %, vorzugsweise 5 bis 15 %, vorzugsweise 5 bis 10 %, vorzugsweise 5 bis 95 %, vorzugsweise 10 bis 90 %, vorzugsweise 15 bis 80 %, vorzugsweise 20 bis 80 %, vorzugsweise 20 bis 70 %, vorzugsweise 20 bis 60 %, vorzugsweise 20 bis 50 %, vorzugsweise 20 bis 40 %, vorzugsweise 30 bis 40 %, insbesondere 20 bis 30 %, von der Maische MA bedeckt ist oder in die Maische MA eintaucht.

Dabei kann die Trennvorrichtung als eine Trennvorrichtung mit einer drehbar gelagerten Trenn- oder Filterfläche oder als drehbar gelagerte Trennvorrichtung oder drehbar gelagerter Filter ausgeführt sein; und/oder
die Trennvorrichtung in scheibenförmiger oder zylindrischer Gestalt oder im Wesentlichen scheibenförmiger oder zylindrischer Gestalt ausgebildet sein; und/oder
wobei die Grundfläche und/oder die Mantelfläche der Trennvorrichtung oder ein Teil der Grundfläche und/oder die Mantelfläche teilweise oder vollständig als Trenn- oder Filterfläche ausgebildet ist; und/oder
wobei die Trennvorrichtung derart im System angeordnet ist, dass die Mittelachse oder eine Drehachse der Trennvorrichtung im Wesentlichen parallel zu einem Flüssigkeitsspiegel LL der in der Umgebung der Trennvorrichtung vorhandenen Maische MA angeordnet ist, oder
die Mittelachse oder eine Drehachse der Trennvorrichtung mit dem Flüssigkeitsspiegel LL der in der Umgebung der Trennvorrichtung vorhandenen Maische MA oder mit der Horizontalen einen Winkel mit einem Betrag im Bereich von 0,1 bis 45 °, vorzugsweise 0,1 bis 20°, vorzugsweise 0,5 bis 10°, vorzugsweise 0,5 bis 8 °, vorzugsweise 0,5 bis 6 °, insbesondere 0,5 bis 4 °, einschließt.

Die vorliegende Erfindung basiert auf der Beobachtung der Erfinder, dass die herkömmlichen Verfahren in der Bier- oder Getränkeherstellung, insbesondere beim Läutern, die verfahrenstechnischen Schritte des Gewinnens und Klärens der Würze, insbesondere der Vorderwürze, in derselben Vorrichtung, nämlich Läuterbottich oder Maischefilter, und überwiegend auch im selben Verfahrensschritt durchgeführt wird.

Aufgrund dieser Überlagerung mehrerer Verfahrensschritte und insbesondere aufgrund der Durchführung mehrerer Verfahrensschritte in ein und derselben Vorrichtung, beispielsweise dem Läuterbottich, lassen sich diese nicht individuell und vollends optimieren.

Der vorliegenden Erfindung liegt die Erkenntnis zugrunde, dass eine verfahrens- und vorrichtungstechnische Auftrennung der Würzegewinnung und der Klärung der gewonnenen Würze vorteilhaft ist. Indem die Gewinnung (Trennung der Maische in Würze und Treber) und Klärung räumlich getrennt in unterschiedlichen Vorrichtungen stattfinden, kann die jeweils eingesetzte Vorrichtung optimal auf den dort durchzuführenden Verfahrensschritt angepasst werden. Zum anderen werden die Trennung und die Klärung zeitlich voneinander entkoppelt. So wird erfindungsgemäß die Trennvorrichtung nicht mehr für die Klärung der Würze belegt und kann nach Abschluss der Trennung unmittelbar anschließend zur Trennung der Maische des nächsten Suds verwendet werden.

Die Erfindung basiert daher auf der Erkenntnis der Erfinder, dass durch eine Auftrennung der Läuterarbeit in eine Gewinnung einer trüben Vorderwürze mit Abtrennung grober Spelzen-/Treberbestandteile, einer davon räumlich und zeitlich weitgehend oder vollständig getrennten Aussüßung der verbleibenden Festbestandteile der Maische/Treber und einer wiederum von diesem beiden Schritten räumlich und zeitlich getrennte Klärung der gewonnenen Würze bzw. Einstellung einer geeigneten Trübung der Würze und/oder eines geeigneten Feststoffgehaltes, die durchgeführten Verfahrensschritte und die hierzu eingesetzten Vorrichtungen jeweils für sich optimiert werden können. Durch die separate Durchführung der Teilschritte können verfahrenstechnische und vorrichtungstechnische Kompromisse, wie sie bei den bisher eingesetzten Verfahren und Vorrichtungen erforderlich waren, vermieden werden.

Da jeder Verfahrensschritt nun für sich optimiert werden kann, wird die Würzegewinnung bzw. die Läuterarbeit im Sudhaus insgesamt verbessert. Insbesondere wird erfindungsgemäß eine Beschleunigung der Würzegewinnung im Sudhaus erreicht. In einer besonders vorteilhaften Ausführungsform sieht die Erfindung vor, die Würze entgegen den herkömmlichen Batchverfahren kontinuierlich zu gewinnen, woraus sich weitere Vorteile ergeben.

Die Erfinder der vorliegenden Anmeldung haben weiter erkannt, dass der Verfahrensschritt der Würzeerzeugung in der Brauerei- oder in der Getränkeindustrie erheblich verkürzt werden kann, wenn bei der Trennung der Maische in Würze und eine Restmaische oder Treber auf den Aufbau einer Filterschicht, bestehend aus Bestandteilen der Maische, weitestgehend oder vollständig verzichtet wird. Nach der Erkenntnis der Erfinder wird dies dadurch realisiert, dass beim Trennen der Maische eine mit Öffnungen versehene Oberfläche relativ zur vorgelegten Maische bewegt wird.

Durch die relative Bewegung zwischen Maische und der Oberfläche einer Trennvorrichtung wird der Aufbau einer Filterschicht aus Maischebestandteilen zumindest weitestgehend vermieden. Hierdurch werden die Strömungskanäle in der mit Öffnungen versehenen Oberfläche der Trennvorrichtung freigehalten, sodass die Würze beim Durchströmen der Oberfläche der Trennvorrichtung einen geringeren Strömungswiderstand gegenüber den herkömmlichen Würzegewinnungsverfahren erfährt.

Im Gegensatz zum klassischen Läuterbottich oder Maischefilter sorgt erfindungsgemäß eine relative Bewegung der Trennvorrichtung zur Maische überraschenderweise dafür, dass sich keine nennenswerte Filterschicht aus Maischebestandteilen beim Durchtritt der Würzeteilchen unter Zurückhaltung von Feststoffen auf der Oberfläche der Trennvorrichtung aufbaut. Indem die Maische bedingt durch die relative Bewegung gewissermaßen permanent oder zumindest zeitweise eine gewissermaßen "frische", zur Trennung geeigneten Oberfläche sieht, bleibt der Strömungswiderstand beim Durchströmen der Würze durch die Trennvorrichtung im Verlauf der Trennung im Wesentlichen unverändert hoch.

Die Erfinder vermuten, dass einerseits durch die relative Bewegung zwischen Maische und der mit Öffnungen versehenen Oberfläche der Trennvorrichtung der Aufbau einer Filterschicht verhindert wird. Andererseits wird vermutet, dass die Bestandteile der Maische, insbesondere die darin enthaltenen Feststoffpartikel, in Verbindung mit der beschriebenen Relativbewegung eine abrasive Wirkung auf die Oberfläche der Trennvorrichtung haben, sodass die Maische bei der erfindungsgemäßen Trennung eine unerwartet hohe Reinigungswirkung auf die Oberfläche der Trennvorrichtung hat.

Bei der erfindungsgemäßen Maischetrennung nehmen die Erfinder bewusst in Kauf, dass aus der Maische im Wesentlichen nur Grobpartikel abgetrennt werden. Dagegen gehen feinere Maischebestandteile der sogenannte Feinteig, nach der Erkenntnis der Erfinder gegenüber dem bisherigen Würzegewinnungsverfahren, wie sie praktiziert werden, in die Würze über. Folglich wird bei der erfindungsgemäßen Maischetrennung eine Würze mit einer höheren Trübung und Feststoffgehalt als üblicherweise gewünscht oder angestrebt, gewonnen. Insgesamt kann erfindungsgemäß eine erhebliche Verkürzung der Läuterzeit erzielt werden. So kann erfindungsgemäß ein großtechnischer Sud in 45 min, 30 min oder sogar weniger abgeläutert werden.

Da erfindungsgemäß auch bei hohen Volumendurchsätzen von Maische, wenn überhaupt, nur eine minimale Verblockung der Oberfläche der Trennvorrichtung auftritt, kann die erfindungsgemäße Würzegewinnung kontinuierlich oder diskontinuierlich und mit hoher Standzeit durchgeführt werden. Im Gegensatz zu den bisher als Batchverfahren durchgeführten Läuterverfahren (Läuterbottich; Maischefilter) erzielt die Erfindung, wenn als kontinuierliches Verfahren oder kontinuierlich betriebene Vorrichtung gestaltet, kürzere Trennzeiten, kleinere Vorrichtungen und sonstige mit kontinuierlichen Verfahren verbundene Vorteile.

Im Zuge der Relativbewegung gegenüber der Maische kann der Kontakt der Oberfläche der Trenneinrichtung oder einer Teilfläche derselben mit der Maische vorübergehend unterbrochen werden. Wenn die Relativbewegung während der Trennung aus der Maische beispielsweise eine Drehbewegung der Trennvorrichtung oder ihrer Oberfläche ist, kann die Oberfläche oder wenigstens eine Teilfläche derselben aus der Maische austreten und zu einem späteren Zeitpunkt wieder in die Maische eintreten. Beim Austreten dieses Oberflächenelements der Trennvorrichtung aus der Maische wirkt auf die gegebenenfalls an dem Oberflächenelement anhaftenden Feststoffe einerseits die Schwerkraft. Im Moment des Austretens eines Teilchens aus der Maische, d.h. im Moment des Lösens des Teilchens von der Flüssigkeitsoberfläche, hört zudem der Auftrieb, der im Flüssigkeitskörper der Maische noch der Schwerkraft entgegenwirkt, auf zu wirken, so dass in der Summe eine zum Erdmittelpunkt gerichtete Kraft überwiegt. Andererseits wirkt beim Austritt aus der Flüssigkeit die Oberflächenspannung der Maische, sodass die anhaftenden Partikel geneigt sind, beim Austritt eines Oberflächenelements der Trennvorrichtung aus der Maische an der Oberfläche der Maische oder sogar in der an der Trennvorrichtung angestauten Maische zu verbleiben.

Damit wirken gerade am Flüssigkeitsspiegel der Maische im Bereich der Grenzfläche zur Oberfläche bzw. Filterfläche der Trennvorrichtung Kräfte auf die Feststoffteilchen der Maische, wobei diese Kräfte der relativen Bewegung der Oberfläche in der Summe entgegenstehen können. Somit neigen ausgetragene, mitgerissene oder an der Oberfläche der Trennvorrichtung zeitweise anhaftende Feststoffteilchen dazu, an der Oberfläche entgegen der Relativbewegung eine Reibungswirkung an der bewegten Oberfläche bzw. Filterfläche der Trennvorrichtung zu entfalten.

Es wird vermutet, dass hierdurch die vorstehend beschriebene Reinigungswirkung weiter verstärkt und eine verbesserte Abreinigung der Oberfläche der Trennvorrichtung erzielt wird.

Erfindungsgemäß kann die Oberfläche der Trennvorrichtung und/oder die Trennvorrichtung als solche beispielsweise aus Edelstahl, Kupfer, Kunststoff, vorzugsweise Polypropylen, oder ein Gewebe/Textil bestehen.

Indem die Relativbewegung der Oberfläche während der gesamten oder wenigstens überwiegenden Dauer des Trennens durchgeführt wird, wird eine dauernde und damit zeitlich eine maximale Abreinigung der Oberfläche der Trennvorrichtung erzielt.

Die relativ bewegte Oberfläche der Trenneinrichtung kann während des Trennvorgangs nur in einem beschränkten Umfang mit Maische bedeckt sein bzw. in die Maische eingetaucht sein.

Wenn die Oberfläche der Trenneinrichtung nur teilweise mit Maische bedeckt ist, können sich Feststoffpartikel, die sich aufgrund der Relativbewegung der Trennvorrichtung im Bereich des Maischespiegels bzw. der Maischeoberfläche ansammeln, von der sich bewegenden Oberfläche der Trenneinrichtung überraschend leicht und effektiv "mitgenommen" und somit aus der Maische und letztlich aus der Vorrichtung ausgetragen werden. Überraschend ist ferner, dass die ausgetragenen Partikel, also die Restmaische oder ein Teil davon, mit einem Trockensubstanzgehalt von bis zu 75 % verhältnismäßig "trocken" ausgetragen werden. Ein derart trockener Austrag von Restmaische oder Treberpartikeln ist von den bisher eingesetzten Läutertechniken, insbesondere von Läuterbottich und Maischefilter, nicht erreicht worden.

Der Vorteil eines hohen Bedeckungsgrades der Oberfläche der Trennvorrichtung mit Maische ist eine hohe Filterfläche und damit ein hoher Durchsatz an Maische oder Restmaische und ein hoher Volumenstrom an gewonnener Würze.

Der Vorteil eines mittleren bis geringeren Bedeckungsgrades der Oberfläche der Trennvorrichtung mit Maische ist, dass der für eine Anreicherung und Austragung, vorzugsweise möglichst "trockene" Austragung, von Feststoffen aus der Maische und letztlich aus der Vorrichtung vorhanden Raum im Bereich der Oberfläche der Trennvorrichtung oberhalb des Maischespiegels ausreichend zur Verfügung steht.

Mit Blick auf die vorstehend beschriebenen Gegebenheiten hat sich ein Bedeckungsgrad oder Eintauchgrad der Oberfläche der Trennvorrichtung im Bereich von 1 bis 60 %, vorzugsweise 5 bis 20 %, vorzugsweise 5 bis 15 %, vorzugsweise 5 bis 10 %, vorzugsweise 30 bis 60 %, als besonders vorteilhaft erwiesen.

Erfindungsgemäß kann der gasgefüllte Raum der Vorrichtung ein Gas enthalten, das Luft oder vorzugsweise ein Inertgas wie Kohlenstoffdioxid, Stickstoff oder Helium oder Mischungen derselben enthält oder daraus besteht. Durch den Einsatz von Inertgasen kann eine nachteilige Oxidation der Maische oder Würze verhindert werden.

Durch die Wahl der optimalen Porengröße können, je nach Zusammensetzung der Maische der Volumenstrom der gewonnenen Würze und deren Eigenschaften in Bezug auf deren stoffliche Zusammensetzung vorteilhaft eingestellt werden. So wird bei einer Porengroße von wenigstens 65 µm ein zufriedenstellender Volumenstrom der gewonnen Würze erzielt. Wird ein Porendurchmesser von größer 350 µm gewählt, so wird zwar ein hoher Volumenstrom an gewonnener Würze erreicht, jedoch findet gegebenenfalls eine hinreichende Abscheidung von gröberen Partikeln nicht mehr statt. Des Weiteren kann der Kontakt der Maische mir der Oberfläche der Trenneinrichtung in der Aufnahmeeinrichtung
Ferner kann die Trennvorrichtung als eine drehgelagerte Trennvorrichtung oder als drehgelagertes Filter ausgeführt sein. Insbesondere kann die Drehachse der Trennvorrichtung mit dem Flüssigkeitsspiegel einer in die Aufnahmeeinrichtung der Vorrichtung eingefüllten Flüssigkeit einen wie vorstehend beschriebenen kleinen Winkelbetrag einschließen. Durch diese Anordnung, bei der die mit den Öffnungen vorgesehene Oberfläche der Trennvorrichtung senkrecht oder annähernd senkrecht zum Maischespiegel angeordnet ist, wird beim Drehen der Trennvorrichtung eine hohe Relativgeschwindigkeit der Maische zu der Oberfläche der Trennvorrichtung erzielt. Hierdurch wird eine gute Reinigung der Oberfläche erzielt.

Bei Ausgestaltung der Trennvorrichtung in scheibenförmiger Gestalt, bei der die Grundfläche als Oberfläche, welche die Öffnungen aufweist, bzw. Trennfläche ausgebildet ist, kann eine Trenneinrichtung kompakter Bauart mit einem hohen Verhältnis von Oberfläche mit Trennwirkung zur Gesamtfläche erzielt werden.

Indem die räumliche Anordnung der Mittelachse oder der Drehachse der Trennvorrichtung oder seiner Oberfläche vorzugsweise in etwa parallel zum Maischespiegel gewählt wird, wobei Abweichungen von der parallelen Ausrichtung in bestimmten Grenzen zur Erzielung der erfindungsgemäßen Wirkungen durchaus möglich sind, lassen sich die Relativbewegung der Oberfläche, das teilweise Bedecken der Oberfläche bzw. das teilweise Eintauchen in die Maische, eine gute Abreinigung der Oberfläche und ein hoher Feststoffaustrag mit einer konstruktiv einfachen Vorrichtung bei leichter Handhabbarkeit erzielen.

Darüber hinaus gelingt durch eine mehr oder weniger senkrechte Anordnung der Oberfläche zum Maischespiegel in Kombination mit der nur teilweisen Bedeckung der Oberfläche mit der Maische und der Drehbewegung zu dem auch ein Abscheiden von verhältnismäßigen "trockenen" Treberpartikeln im Bereich, wo die Oberfläche der Trennvorrichtung im Zuge der Drehbewegung aus der Maischeoberfläche austritt. Überraschenderweise gelingt hierdurch sogar der Austrag einer relativ "dicken" Restmaische oder sogar von verhältnismäßig trockenen Treberpartikeln aus der Maische und letztlich aus der Trennvorrichtung.

Es ist besonders vorteilhaft, wenn die Oberfläche der Trennvorrichtung derart relativ zur Maische, zur Restmaische und/oder zur Aufnahmeeinrichtung der Vorrichtung beweglich oder bewegbar ist, dass eine Mehrzahl von Oberflächenelementen, der Oberfläche der Trennvorrichtung, die beim Trennen von der Maische bedeckt sind, im Zuge der Relativbewegung aus der Maische austreten und zumindest zeitweise nicht von Maische bedeckt sind, um im weiteren Verlauf der Relativbewegung wieder in die Maische einzutauchen.

Wenn die Maische oder eine Restmaische die erfindungsgemäße Vorrichtung allein durch die Schwerkraft durchströmen kann, vereinfacht sich die Konstruktion der erfindungsgemäßen Vorrichtung, bspw. durch Wegfall von Pumpen etc., erheblich.

Zudem wird erfindungsgemäß der Energieverbrauch zum Betrieb der Vorrichtung um 40 % oder mehr gegenüber dem herkömmlichen Betrieb eines Läuterbottichs herabgesetzt. Ferner werden durch den geringeren Verbrauch und/oder die geringere Anzahl von Verbrauchern die Strom-Verbrauchsspitzen der erfindungsgemäßen Vorrichtungen bzw. Systeme gesenkt. Hierdurch kann die erforderliche installierte Leistung verringert werden. Des Weiteren ist der Energieeintrag in das zu trennende Medium und damit dessen Erwärmung geringer, was sich produktschonend auswirkt. Indem auf das Pumpen verzichtet werden kann, ist der Anströmdruck der einströmenden Maische oder Restmaische geringer, wodurch die Oberfläche der Trennvorrichtung vor Verblocken zusätzlich geschützt wird.

Die Oberfläche der Trennvorrichtung kann eine vielfältige Gestalt aufweisen, was eine hohe Flexibilität der Anlagengestaltung mit sich bringt. Bevorzugte Konturen der Oberfläche, wie bspw. konvexe, konkave, wellenförmige oder zickzackförmige Konturen, können in der Nähe der Oberfläche, welche sich in der Maische oder Restmaische und relativ zur Maische oder Restmaische bewegt, zusätzliche Strömungseffekte oder Verwirbelungen an der Oberfläche der Trennvorrichtung verursachen. Hierdurch wird die Abreinigung der Oberfläche weiter verbessert.

Das Vorsehen von Vorsprüngen, wie bspw. Stege oder Paddel, welche von der Oberfläche der Trennvorrichtung vorstehen, und vorzugsweise senkrecht oder im Wesentlichen senkrecht oder schräg zur Richtung der Relativbewegung der Oberfläche der Trennvorrichtung angeordnet sind, verbessern den Feststoffaustrag aus der Maische oder Restmaische und aus der Vorrichtung.

Erfindungsgemäß sind zwei Trennvorrichtungen je Vorrichtung vorgesehen, deren trennwirksame Oberflächen vorzugsweise im Wesentlichen parallel zueinander angeordnet sind und einen Abstand von nicht mehr als 50 cm, besser nicht mehr als 30 cm, zueinander aufweisen.

Auf diese Weise wird eine Vorrichtung von hoher Kompaktheit bei großer wirksamer Trennfläche durch das Vorhandensein von zwei (trennaktiven) Oberflächen der Trennvorrichtungen bzw. Trennflächen. Wenn beide Oberflächen zudem dieselbe oder in etwa dieselbe Richtung der relativen Bewegung, insbesondere dieselbe Drehrichtung im Raum ausweisen, und die beiden Oberflächen der Trennvorrichtungen hinreichend gering voneinander beabstandet angeordnet sind, wird ein besonders effektiver Austrag von Feststoffen aus der Maische oder Restmaische und aus der Vorrichtung erzielt, wobei die ausgetragenen Feststoffe einen relativ hohen Trockensubstanzgehalt aufweisen.

Ähnliche Wirkungen werden erzielt, wenn bei Vorhandensein wenigstens einer Trennvorrichtung in der Vorrichtung der Abstand zu einer Wand der Vorrichtung oder insbesondere der Aufnahmevorrichtung hinreichend gering ist, vorzugsweise nicht mehr als 50 cm, besser nicht mehr als 30 cm, beträgt.

Die erfindungsgemäße Vorrichtung ist nicht auf die Würzegewinnung beschränkt. Sie kann vielmehr vorteilhaft für eine Mehrzahl von Medien aus der Brauerei oder Getränkeindustrie zur Abtrennung von Feststoffen eingesetzt werden. Dabei werden jeweils ähnliche Vorteile wie die vorstehend für die Maischetrennung/Würzegewinnung diskutierten erzielt.

Erfindungsgemäß können die Steuervorrichtungen als separate Steuervorrichtungen ausgebildet sein. Sie können jedoch auch in einer einzigen Steuervorrichtung realisiert sein, welche die Funktionen der erfindungsgemäßen ersten, zweiten, dritten und/oder vierten Steuervorrichtung ausübt.

Die Vorteile der erfindungsgemäßen Vorrichtung gelten für das erfindungsgemäße System analog.

Indem mehrere, vorzugsweise zwei bis vier oder mehr, insbesondere bis zu zehn, erfindungsgemäße Vorrichtungen in Serie geschaltet werden, kann eine mehrstufige Abtrennung von Feststoffen realisiert werden. Bei einem System mit mehrstufiger Abtrennung kann durch Abstimmung der Porengrößen der Öffnungen der Oberflächen der einzelnen Vorrichtungen, bspw. stromabwärts immer kleiner werdende Porengrößen, ein Zusetzen oder Verblocken der Trennoberfläche gänzlich vermieden werden oder zumindest länger hinausgezögert werden. Hierdurch ist der erzielbare Gesamtvolumenstrom des zu trennenden Mediums über das System hoch.

Darüber hinaus lassen sich auch andere Parameter, wie der Bedeckungsgrad oder Eintauchgrad der Oberfläche der Trennvorrichtung bezüglich der Maische oder Restmaische, die Gestalt der jeweiligen Trennvorrichtung und insbesondere ihrer jeweiligen Oberfläche und die sonstigen Parameter, die im Rahmen dieser Anmeldung betreffend die erfindungsgemäße Vorrichtung oder das System genannt sind, bei jeder Trennvorrichtung in der kaskadenartigen Anordnung den jeweiligen technologischen Gegebenheiten und Zielsetzungen individuell anpassen. Hierdurch steigen insgesamt die Flexibilität des erfindungsgemäßen Systems und dessen Anpassbarkeit an das zu trennende oder erhaltene Medium.

Zwischen zwei Trennstufen, d.h. zwischen einer Würzegewinnungsstufe in Gestalt einer erfindungsgemäßen Vorrichtung und der folgenden, kann jeweils eine Portion eines Extraktionsmittels, vorzugsweise Wasser oder eine verdünnte Würze, der jeweiligen Restmaische zugemischt werden. In der folgenden Würzegewinnungsstufe wird dann eine Würze in entsprechend hoher Verdünnung (Nachguss) gewonnen. Je mehr Würzegewinnungsstufen das System umfasst, desto weitreichender kann eine Auswaschung der Restmaische erzielt werden, wodurch sich die Extraktausbeute der Würzeerzeugung insgesamt steigt.

Besonders effizient im Sinne einer hohen Extraktausbeute und Vermeidung einer unerwünscht hohen Verdünnung des resultierenden Würze-Gesamtvolumens ist, wenn das Extraktionsmittel im Gegenstrom zum Maische/Restmaischestrom geführt wird. So kann bspw. am Ende der Serie oder Kaskade von Vorrichtungen bzw. des Systems Wasser als Extraktionsmittel eingesetzt werden und die bei der letzten Stufe gewonnene verdünnte Würze bei der zweitletzten Stufe als Extraktionsmittel eingesetzt werden.

Alternativ kann jedoch ein "frisches", d.h. würzefreies Extraktionsmittel, wie bspw. würzefreies Wasser, bei jedem Extraktionsschritt bzw. Mischschritt verwendet werden. Vorteilhaft ist hierbei, dass die Auswaschung, im Sinne eines stärkeren Sinkens der Würzekonzentration von Trennstufe zu Trennstufe, effizienter als bei der vorstehend beschriebenen Gegenstromfahrweise ist. Hierdurch werden insgesamt weniger Trennstufen benötigt, was den apparativen Aufwand und die Kosten senkt.

Die Vorteile der erfindungsgemäßen Vorrichtung und des erfindungsgemäßen Systems gelten für das erfindungsgemäße Verfahren analog.

Der Einsatz der erfindungsgemäßen Vorrichtung und des erfindungsgemäßen Systems erlaubt die Einstellung einer erhöhten Trübung und einer bestimmten Feststofffracht, zumindest betreffend die Feinpartikelfraktion, in der resultierenden Würze. Die mit den erfindungsgemäßen Würzegewinnungsverfahren erhaltenen Würzen unterscheiden sich eindeutig von den heute im Läuterbottichablauf üblicherweise gewünschten, blanken, fast wasserklaren Würzen. So findet erfindungsgemäß eben keine hochgradige Abreicherung der Maische statt. Vielmehr können beim erfindungsgemäßen Verfahren wertvolle Maischeinhaltsstoffe, wie langkettige Fettsäuren C16 bis C18:2, Zink und eine Partikelfracht, welche sich positiv auf das Gärverhalten und die Gärgeschwindigkeit und möglicherweise auch auf die Qualität der mit der erfindungsgemäß erzeugten Würze hergestellten Biere auswirkt.

Durch das Zuführen von Wasser oder einer verdünnten Würze zur Restmaische des jeweiligen Trennschritts und das Vorsehen einer Einrichtung hierzu, welche jeweils in einer Trennvorrichtung oder insbesondere stromabwärts zu einer Vorrichtung und stromaufwärts zur nachfolgenden Vorrichtung angeordnet ist, wird eine gezieltes Aussüßen (Lösen und Separieren von wasserlöslichen Kohlenhydraten aus der jeweiligen Restmaische) erzielt.

Durch das Anordnen eines Stauelements im Strömungsweg stromabwärts zu einer erfindungsgemäßen Vorrichtung und stromaufwärts zur nachfolgenden Vorrichtung, d.h. im Strömungsweg der Restmaische oder mit Wasser oder Würze verdünnten Restmaische zwischen zwei Vorrichtungen, wird die Suspension zum Überströmen eines wehrartigen Hindernisses gezwungen. Hierbei kann eine Sedimentation von Feststoffpartikeln im Staubereich stromaufwärts zum Stauelement erreicht werden, wodurch die Klärwirkung verbessert wird.

Besonders vorteilhaft im Sinne einer weitgehenden Feststoffabtrennung und effizienten Extraktgewinnung ist die Kombination aus einem Stauelement und einer Einrichtung zum Zuführen von Wasser oder einer verdünnten Würze, welche beide jeweils zwischen zwei erfindungsgemäßen Vorrichtungen angeordnet sind.

Eine Einrichtung zum Klären einer Würze und/oder zum Einstellen einer vorbestimmten Trübung in einer Würze erlaubt eine räumlich und zeitlich getrennte Klärung der beispielsweise durch die vorstehend beschriebene, erfindungsgemäße Maischetrennung gewonnenen Würze oder einer auf andere Weise gewonnenen Würze oder eines anderen Mediums aus der Brauerei, Gärungsindustrie oder Getränkeindustrie. Zudem erlaubt die vorgeschlagene Einrichtung die Einstellung einer geeigneten Trübung und/oder eines geeigneten Feststoffgehaltes in den vorstehend genannten Medien.

Dabei wird die Würze oder ein anderes Medium einem Aufnahmegefäß der Einrichtung, welches beispielsweise als längliche Rinne ausgestaltet ist, an oder im Bereich einer Einströmstelle, zugeführt. Bei der Erst- oder Anfahrbefüllung der Einrichtung steigt der Würzespiegel im Aufnahmegefäß wenigstens solange an, bis der Würzespiegel das Niveau wenigstens eines Überlaufes erreicht hat. Beim Durchströmen des Aufnahmegefäßes der Einrichtung zwischen Einströmstelle und Überlauf reichern sich grobe und feine bis feinste Feststoffpartikel (in Brauerkreisen auch als "Feinteig" bezeichnet) durch die Wirkung der Schwerkraft aus der Würze zumindest teilweise ab. Damit kann die über den Überlauf oder die Überläufe überströmende Würze eine verhältnismäßig hohe Klarheit und weitgehende Partikelfreiheit erreichen, in etwa vergleichbar mit der Trübung einer klassischen Läuterbottichwürze.

Nachdem jedoch das Bereitstellen einer Würze mit hoher Klarheit aus technologischer Sicht nicht immer gewünscht ist, bietet die Einrichtung die Möglichkeit, die Würzetrübung auf einfache Weise definiert einzustellen. Dazu ist wenigstens ein Überlauf als bewegliches Element ausgebildet, welches das Öffnen eines Durchlasses, beispielsweise in Gestalt eines Spalts am Boden des beispielsweise als Rinne ausgebildeten Aufnahmegefäßes ermöglicht. So wird bei geschlossenem Spalt Würze von hoher Klarheit beim Überströmen des Verlaufs gewonnen. Wird der Spalt durch Bewegen des Überlaufs geöffnet, können Feststoffpartikeln und trübungsverursachende Inhaltsstoffe der Würze, welche bei Durchströmen des Aufnahmegefäßes sedimentiert sind oder bodennah im Aufnahmegefäß schweben, mit dem Würzestrom aus der Einrichtung ausgetragen werden. Je weiter der Spalt geöffnet wird, desto größer ist der Anteil der trüben, Partikel enthaltenden Würzefraktion, und desto trüber und/oder partikelreicher ist folglich die resultierende Gesamtwürze. Auf diese Weise lässt sich die Würzetrübung je nach technologischer Zielsetzung einfach und effektiv einstellen. Die eingestellte Würzetrübung kann mit hoher Gleichmäßigkeit beibehalten werden.

Mit dem Einstellen einer vorbestimmten Fracht an Partikeln, langkettigen Fettsäuren C16 bis C18:2 und/oder Zink über die Trübung/Feststoffgehalt kann erfindungsgemäß eine qualitativ verbesserte Würze bereitgestellt werden. In der Folge können Vorteile im Sinne einer schnelleren Gärung der Würze und der verbesserten Bierqualität, beispielsweise einer verbesserten Geschmacks- oder Schaumstabilität, realisiert werden.

Wenn die Einrichtung als längliches Gefäß ausgebildet ist, ist der zur Sedimentation von Partikeln nutzbare Strömungsweg groß. Hierdurch kann ein hoher Abscheidungsgrad für Feststoffpartikeln und/oder ein Volumendurchsatz an Würze erzielt werden.

Die Einrichtung ist jedoch nicht nur auf die Klärung einer Würze oder das Einstellen einer vorbestimmten Trübung beschränkt. So eignet sich die vorgeschlagene Einrichtung auch zur Behandlung von anderen Medien, insbesondere zum Abtrennen von Feststoffen aus dem Medium aus dem Bier- und Getränkebereich.

Ferner ein System zum Klären einer Würze und/oder zum Einstellen einer vorbestimmten Trübung in der Würze offenbart. Im System werden zwei, drei, vier oder mehr, vorzugsweise bis zu zehn, der vorstehend beschriebenen Einrichtungen in Serie geschaltet. Durch diesen kaskadenartigen Aufbau des Systems wird die Trennleistung gegenüber einer einzigen Einrichtung mit einem Strömungsweg derselben Gesamtlänge erheblich verbessert.

Zudem lässt sich ein kaskadenartiger Aufbau der Einrichtungen im System Platz sparenden Raum anordnen, beispielsweise durch Anordnung der Mehrzahl von Einrichtungen untereinander.

Bei dieser Anordnung entsteht ferner der Vorteil, dass die Würze nur durch die Wirkung der Schwerkraft durch das System strömt, ohne dass Pumpenergie zum Transport der Würze oder des Mediums aufgewendet werden müsste. Hierdurch wird der apparative Aufwand minimiert, der Energieverbrauch gering gehalten und ein qualitätsmindernder Energieeintrag in die Würze minimiert.

Eine gute Feststoffabscheidung kombiniert mit einem ausreichenden Volumendurchsatz an Würze wird durch Beschränkung der Strömungsgeschwindigkeit (Lineargeschwindigkeit) auf die angegebenen Bereiche erzielt.

Die Einrichtung zum Klären von Würze und das aus einer Mehrzahl dieser Einrichtungen bestehende System sind nicht nur auf die Behandlung, insbesondere Klärung oder Einstellung einer vorbestimmten Trübung beschränkt, sondern eignen sich auch zur Behandlung anderer Medien aus dem Bereich der Bier- und Getränkeherstellung.

Die Vorteile für die Einrichtung zum Klären von Würze und das aus einer Mehrzahl dieser Einrichtungen bestehende System gelten für das erfindungsgemäße Verfahren zum Klären einer Würze und/oder zum Einstellen einer vorbestimmten Trübung in der Würze analog.

Auch das Verfahren ist nicht auf das Klären von Würze oder das Einstellen einer vorbestimmten Trübung in der Würze beschränkt. Es lässt sich auch zur Abtrennung von Feststoffen aus anderen Medien aus dem Bereich der Bier- und Getränkeherstellung vorteilhaft verwenden.

Die vorstehend beschriebenen, erfindungsgemäßen Gegenstände, Vorrichtung, System und Verfahren zur Gewinnung von Würze in der Bierbrauerei und Getränkeindustrie und entsprechende Verwendungen sind geeignet, Würzen aus Maischen zu erzeugen, wobei die Maischen unter Verwendung eines herkömmlichen, zum Einsatz in einem Läuterbottich geeigneten Malz- und/oder Rohfruchtschrotes hergestellt wurden, insbesondere von Schrot, der mittels einer 4- oder 6-Walzenmühle erzeugt wurde.

Überraschenderweise sind die erfindungsgemäßen Gegenstände zudem auch geeignet sein, eine Würze aus einer Maische oder ein anderes Medium zu gewinnen, die aus einem Malz- und/oder Rohfruchtschrot hergestellt wurden, der zum Einsatz in einem Maischefilter geeignet ist, insbesondere von Schrot, der mittels einer Hammermühle erzeugt wurde.

Darüber hinaus sind die erfindungsgemäßen Gegenstände auch geeignet, eine Maische oder ein anderes Medium zu behandeln, insbesondere eine Würze aus einer Maische zu gewinnen, wobei die Maische oder das Medium aus einem oder mehreren vermälzten oder unvermälzten Rohstoffen hergestellt wurde, ausgewählt aus der Gruppe von zur Erzeugung vom Bier oder sonstigen Getränken geeigneten Rohstoffen.

Damit zeigen die erfindungsgemäßen Gegenstände eine hohe, bisher ungekannte Flexibilität hinsichtlich der einsetzbaren Rohstoffe und Vorbehandlung, insbesondere Schrotung, derselben. Bei allen einsetzbaren Rohstoffen und entsprechenden Vorbehandlungen wird eine hohe Extraktausbeute erzielt.

Es ist ausdrücklich Teil der Erfindung, dass sich die vorstehend beschriebenen erfindungsgemäßen Vorrichtungen, Systeme, Verfahren und Verwendungen zur Gewinnung von Würze aus Maische oder zum Behandeln eines Mediums jeweils mit denjenigen hierin offenbarte Vorrichtungen, Systeme, Verfahren und Verwendungen zum Klären einer Würze und/oder zum Einstellen einer vorbestimmten Trübung oder eines vorbestimmten Feststoffgehalts in einer Würze in der Bierbrauerei oder Getränkeindustrie oder zum Behandeln eines Mediums oder zum Einstellen einer vorbestimmten Trübung oder eines vorbestimmten Feststoffgehalts im Medium in der Bierbrauerei oder Getränkeindustrie kombinieren lassen. Insbesondere lassen sich auch alle in dieser Anmeldung genannten Merkmale vorteilhafter Ausführungsformen mit allen beanspruchten Gegenständen kombinieren.

Insbesondere ist es Teil der Erfindung, dass sich alle erfindungsgemäßen Vorrichtungen zur Gewinnung von Würze aus Maische und/oder alle erfindungsgemäßen Vorrichtungen zum Behandeln eines Mediums vorstehende Nr. 1 bis 15 und/oder alle auf diesen Vorrichtungen basierten Systeme vorstehende Nr. 20 bis 40 und/oder alle erfindungsgemäßen Verfahren zur Gewinnung einer Würze und alle erfindungsgemäßen Verfahren zum Behandeln eines Mediums (vorstehende Nr. 56 oder 58 bis 67 oder 70 bis 79) jeweils einzeln oder mehrere in Kombination mit jeweils einem oder mehreren in Kombination der offenbarten Einrichtungen zum Klären einer Würze und/oder zum Einstellen einer vorbestimmten Trübung oder eines vorbestimmten Feststoffgehalts in einer Würze in der Bierbrauerei oder Getränkeindustrie und/oder allen erfindungsgemäßen Einrichtungen zum Behandeln eines Mediums (vorstehende Nr. 100 bis 102 und 109), allen auf diesen Einrichtungen basierten Systemen (vorstehende Nr. 120 und 128 und 129) und/oder allen Verfahren zum Klären einer Würze und/oder zum Einstellen einer vorbestimmten Trübung oder eines vorbestimmten Feststoffgehalts in einer Würze in der Bierbrauerei oder Getränkeindustrie und allen Verfahren zum Einstellen einer vorbestimmten Trübung oder eines vorbestimmten Feststoffgehalts im Medium in der Bierbrauerei oder Getränkeindustrie vorstehende Nr. 130 kombinieren lassen. Analog lassen sich alle für die erfindungsgemäßen Vorrichtungen und Verfahren offenbarten Merkmale und Vorteile auch auf die in dieser Anmeldung explizit und implizit offenbarten Verwendungen beziehen und gelten auch für die Verwendungen als offenbart.

Des Weiteren wird ein Verfahren zum Hopfen eines Mediums in der Bierbrauerei offenbart vorstehende Nr. 150. Dabei nimmt wird die Hopfengabe in die Aufnahmevorrichtung der Vorrichtung zur Gewinnung einer Würze vorgelegt. Durch das Einströmenlassen der Würze oder eines anderen zu hopfenden Mediums, wie beispielsweise ein Bier, kann eine intensive Vermischung der Hopfengabe mit dem zu hopfenden Medium erzielt werden. Anschließend kann die Abtrennung von Feststoffen aus dem gehopften Medium in einer erfindungsgemäßen Vorrichtung zur Würzegewinnung oder einer Einrichtung zum Klären von Würze oder den aus einer Mehrzahl von diesem gebildeten, erfindungsgemäßen Systemen erfolgen.

Analog zur Würzegewinnung erfolgen die Hopfung und/oder insbesondere die spätere Abtrennung von Hopfenpartikeln auf die vorstehend beschriebene, erfindungsgemäße Weise in hoher Geschwindigkeit, d.h. mit einem ausreichenden Volumenstrom, und unter Erzielung der gewünschten Feststoffabscheidung.

Für die erfindungsgemäßen Verwendungen vorstehende Nr. 160 bis 170 gelten die vorstehenden beschriebenen Vorteile und Wirkungen der entsprechenden erfindungsgemäßen Vorrichtungen oder Systeme analog.

Alle erfindungsgemäßen Vorrichtungen V und die darauf aufbauenden Systeme können diskontinuierlich im Batchverfahren betrieben werden. Es ist jedoch besonders vorteilhaft, wenn die erfindungsgemäßen Vorrichtungen V und die darauf aufbauenden Systeme kontinuierlich betrieben werden. Entsprechend können die in dieser Anmeldung beschriebenen, erfindungsgemäßen Verfahren diskontinuierlich, d.h., batchweise, oder besonders vorteilhaft, kontinuierlich betrieben werden. Besteht das erfindungsgemäße Verfahren aus mehreren Schritten, so können alle Schritte jeweils kontinuierlich und damit das gesamte Verfahren kontinuierlich durchgeführt werden. Alternativ können jedoch alle Schritte jeweils diskontinuierlich und damit das gesamte Verfahren diskontinuierlich durchgeführt werden. Die Erfindung ist jedoch nicht hierauf beschränkt. Es ist demnach auch Teil der Erfindung, dass im Rahmen des erfindungsgemäßen Verfahrens kontinuierliche und diskontinuierliche Verfahrensschritte beliebig miteinander kombiniert werden können. Entsprechendes gilt für die Ausgestaltung der erfindungsgemäßen Vorrichtung, des erfindungsgemäßen Systems und der erfindungsgemäßen Verwendungen.

Nach Kenntnis der Erfinder steht bislang insbesondere kein kontinuierliches Verfahren oder eine entsprechende Vorrichtung zur Gewinnung einer Würze aus einer Maische und/oder zum Klären einer Würze oder Einstellen einer definierten Trübung zur Verfügung, das bzw. die den Anforderungen in der Praxis genügen würde.

### Alternativen

Die Vorrichtung nach einer der Nummern 1 bis 15, das System nach einer der Nummern 20 bis 42 und die Verfahren nach einer der Nummern 56 oder 58 bis 67 oder 70 bis 79 eignen sich nicht nur zur Gewinnung einer Würze aus einer Maische. Sie können sich alternativ auch eignen oder verwendet werden zur Behandlung eines anderen Mediums, vorzugsweise Abtrennen von Feststoffteilchen aus einem anderen Medium, in der Bierbrauerei oder Getränkeindustrie, wie eine Würze, insbesondere Läuterwürze, Pfannevoll-Würze, Ausschlagwürze, kalte Würze, gehopfte Würze, oder ein Bier, wie ein Grünbier, Jungbier, teil- oder endvergorenes Bier, oder ein sonstiges alkoholhaltiges oder alkoholfreies Getränk, wie insbesondere ein Getränk auf Würzebasis oder ein Biermischgetränk, oder einer Vorstufe desselben. Entsprechend schließt die Erfindung auch Verfahren zur Behandlung eines der vorstehend definierten Medien mit den analogen Verfahrensschritten, nämlich zur Abtrennung von Feststoffen aus den vorstehend genannten Medien ein.

Die Vorrichtung nach einer der Nummern 1 bis 15, das System nach einer der Nummern 20 bis 42 und die Verfahren nach einer der Nummern 56 oder 58 bis 67 oder 70 bis 79 können sich insbesondere auch eignen oder verwendet werden zur Abtrennung von Feststoffen, vorzugsweise Hopfenpartikel, Heißtrub, Kochtrub, Hefe, Filterhilfsmittel und dergleichen, aus den vorstehend genannten Medien.

Die Einrichtung nach einer der Nummern 100 bis 102 und 109, das System nach einer der Nummern 120 und 128 und 129, und das Verfahren nach der Nummer 130 können sich alternativ auch eignen und verwendet werden zum Klären eines anderen Mediums oder Einstellen einer vorbestimmten Trübung in einem anderen Medium in der Bierbrauerei oder Getränkeindustrie, wie eine Maische, Würze, insbesondere Läuterwürze, Pfannevoll-Würze, Ausschlagwürze, kalte Würze, oder ein Bier, wie ein Grünbier, Jungbier, teil- oder endvergorenes Bier, oder ein sonstiges alkoholhaltiges oder alkoholfreies Getränk, wie insbesondere ein Getränk auf Würzebasis oder ein Biermischgetränk, oder einer Vorstufe desselben.

Figurenbeschreibung/Beschreibung vorteilhafter Ausführungsformen der Erfindung

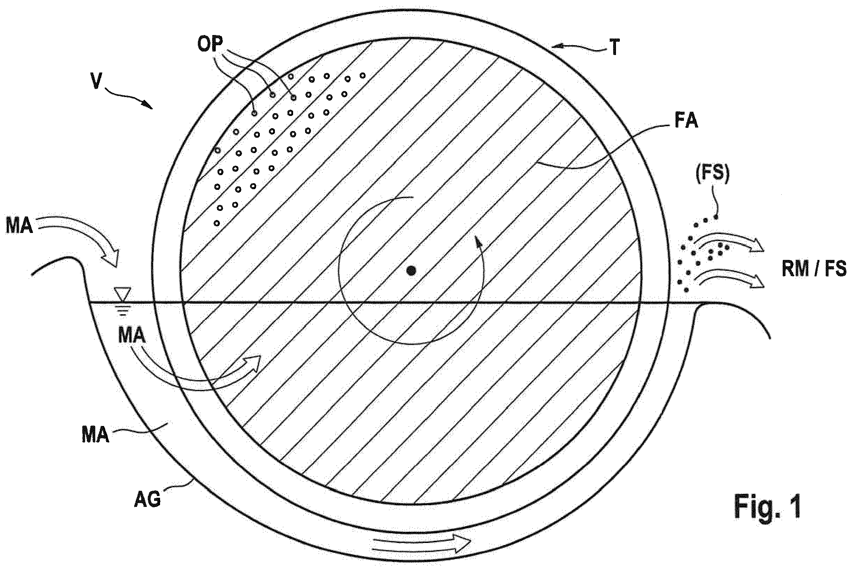

Fig. 1 zeigt eine senkrechte Schnittansicht einer Ausführungsform der erfindungsgemäßen Vorrichtung V. Diese weist eine Aufnahmeeinrichtung AG zum Aufnehmen der Maische MA und wenigstens eine Trennvorrichtung T mit einer Oberfläche FA schraffiert dargestellt auf. Die Oberfläche FA weist eine Vielzahl von Öffnungen OP auf, die in der Figur der Einfachheit halber nur in einem Teilbereich der Oberfläche FA angegeben sind. Vorzugsweise ist die Oberfläche FA in allen ihren Teilflächen mit Öffnungen versehen, um eine möglichst große Filterfläche bereitzustellen. In dieser Ausführungsform ist die Aufnahmeeinrichtung AG als ein wannenförmiges Gefäß ausgebildet. Die Trennvorrichtung T ist als ein kreisförmiges, scheibenförmiges Filterelement ausgebildet, auf dessen Grundfläche die Oberfläche FA angeordnet ist. Die Trennvorrichtung T ist um eine Mittelachse drehbar gelagert. Dabei ist die Mittelachse im Wesentlichen parallel zur Horizontalen ausgerichtet. Die Trennvorrichtung T kann in der Darstellung der Fig. 1, sowohl im, als auch gegen den Uhrzeigersinn drehen. Bevorzugt ist hier jedoch die Drehrichtung "gegen den Uhrzeigersinn".

In der Figur strömt von links Maische MA in die Aufnahmeeinrichtung AG und bedeckt die Trennvorrichtung T und insbesondere die Oberfläche FA teilweise. Dabei kommt die zu trennende Maische mit der als Filterschicht ausgebildeten Oberfläche FA in Kontakt. Hierbei treten Flüssigkeitsteilchen durch die Filterschicht und werden auf der Filtratseite als Würze WO in oder jenseits der Trennvorrichtung T abgeführt. Da während des Trennens die Oberfläche FA eine relative Bewegung durch Drehen gegen den Uhrzeigersinn ausführt vgl. Drehpfeil in Fig. 1, ist die von der Maische bedeckte Oberfläche FA in relative Bewegung zur Maische MA. Zudem treten Teile der Oberfläche FA bedingt durch die Drehung ständig aus der Maische aus rechte Hälfte der Oberfläche FA, während andere Teile der Oberfläche FA linke Hälfte der Oberfläche FA wieder unter den Maischespiegel eintauchen und damit wieder von der Maische MA bedeckt werden. Auf der rechten Seite der Vorrichtung tritt die bei der Abtrennung der Würze WO resultierende Restmaische RM durch Überlauf und ggf. unterstützt von der rotierende Trennvorrichtung T aus der Vorrichtung V aus. Bei der Rotation können im Bereich des Auftretens der Oberfläche FA Feststoffpartikel FS, insbesondere relativ "trockene" Treberpartikel, aufgrund der Relativbewegung ebenfalls aus der Vorrichtung V ausgetragen werden.

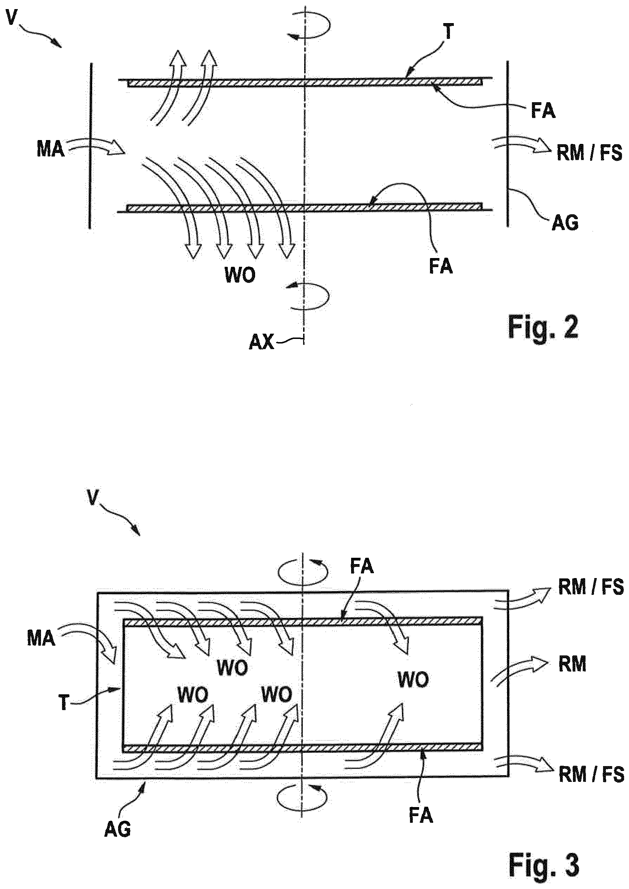

Die erfindungsgemäße Vorrichtung V ist in einer horizontalen Schnittansicht in Fig. 2 dargestellt. Hier wird noch einmal der Eintritt der Maische in die Aufnahmevorrichtung AG, der Durchtritt durch die Oberfläche FA unter Gewinnung der Würze WO dargestellt. In dieser Ausführungsform weist die Vorrichtung V zwei Trennvorrichtungen T auf, die im Wesentlichen parallel angeordnet sind und um eine gemeinsame Drehachse AX rotieren können vorzugsweise in derselben Richtung.

In einer besonderen Ausführungsform, welche in Fig. 3 dargestellt ist, weist die Vorrichtung V eine Trennvorrichtung T in Gestalt eines rotierenden Zylinders auf, dessen beide Grundflächen jeweils als Oberfläche FA ausgestaltet ist. In diesem Fall dringt die Flüssigkeit von außen durch die Filterschichten in das Innere der Trennvorrichtung D, wird dort gesammelt und abgezogen.

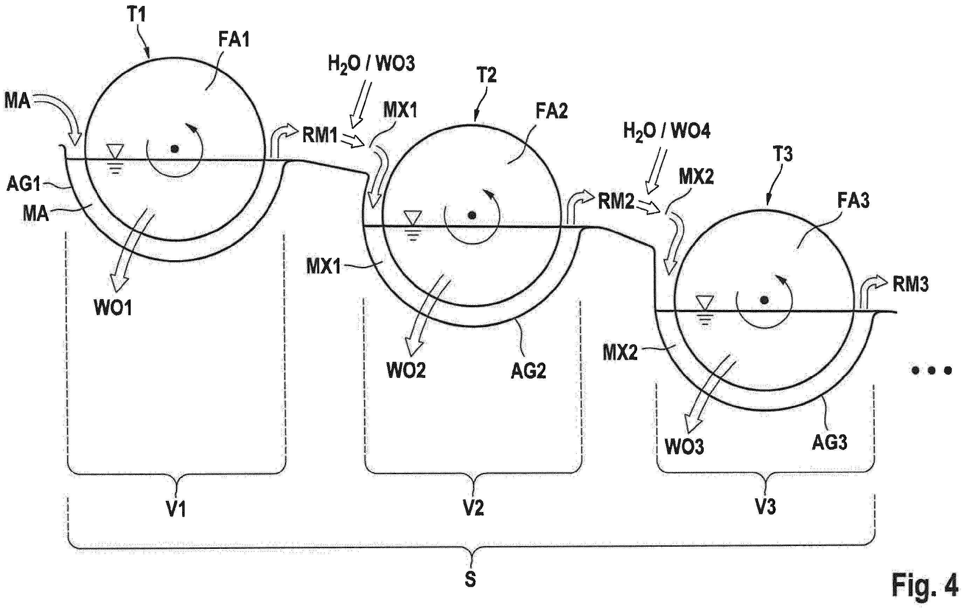

Fig. 4 stellt ein erfindungsgemäßes System dar, welches als Serienschaltung oder Kaskade von drei erfindungsgemäßen Vorrichtungen V ausgebildet ist. Nach dem Trennen der Maische MA in die Würze WO1 Vorderwürze und in die erste Restmaische RM1 in der ersten Vorrichtung V1, wie beschrieben, wird die erste Würze WO1 abgezogen. Zeitgleich läuft die erzeugte erste Restmaische RM1 aus der ersten Vorrichtung über. Dieser ersten Restmaische RM1 wird Wasser oder eine verdünnte Würze WO3 zum Extrahieren des in der ersten Restmaische RM1 noch vorhandenen Restextrakts zugegeben. Das hieraus resultierende Gemisch MX1 wird in der zweiten Vorrichtung V2 analog zur Maische MA in der ersten Vorrichtung V1 getrennt. Die resultierende verdünnte Würze WO2 erster Nachguss wird abgezogen und die verbleibende zweite Restmaische RM2 aus der zweiten Vorrichtung V2 ausgetragen. In der dritten Vorrichtung V3 laufen die vorstehend genannten Schritte analog ab. Dabei erfolgt mit jeder weiteren Stufe eine weitere Extrakt-Abreicherung der erzeugten Restmaische.

Sowohl bei der Vorrichtung V gemäß Fig. 1, als auch bei dem erfindungsgemäßes System mit drei Vorrichtungen V gemäß Fig. 4 strömen alle beteiligten Medien im Wesentlichen schwerkraftgetrieben durch die Vorrichtung bzw. das System.

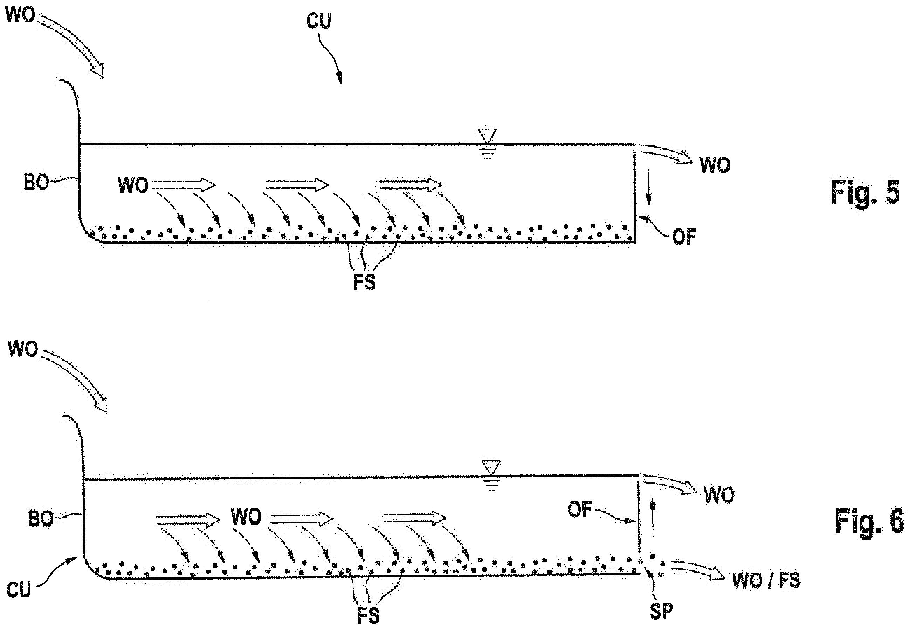

Die Fig. 5 und 6 stellen senkrechte Schnittansichten der Einrichtung CU zum Klären von beispielsweise Würze WO. Die auf der linken Seite einströmende, zu klärende Würze WO wird von dem Gefäß BO aufgenommen. Dieses Gefäß BO ist als längliche Rinne ausgebildet, welche an ihrem stromabwärtigen Ende einen Überlauf OF in Gestalt eines überströmbaren Wehres aufweist. Die einströmende Würze WO strömt von der Einströmstelle in Richtung Überlauf OF, während sich Feststoffpartikel FS in der Rinne durch Schwerkrafteinwirkung absinken und die Würze WO hierdurch geklärt wird. Die am Überlauf austretende, geklärte Würze WO weist einen verhältnismäßig geringen Feststoffgehalt auf am Boden der Rinne geschlossener Überlauf OF; Fig. 5.

Wird dagegen der Überlauf OF nach oben verschoben vgl. Fig. 6, so dass ein Spalt SP zwischen dem unteren Ende des Überlaufs OF und dem Boden der Rinne entsteht, kann die Würze auch durch den Spalt aus dem Gefäß BO ausströmen. Dabei werden im Bereich des Spalts SP mit der Würze auch Feststoffpartikeln FS, also eine trübere Würze als im Vergleich zum oberen Bereich des Überlaufs OF ausgetragen. Durch eine entsprechende Anpassung der Spaltgröße kann die gewünschte Würzetrübung bzw. deren Feststoffgehalt beliebig eingestellt werden.

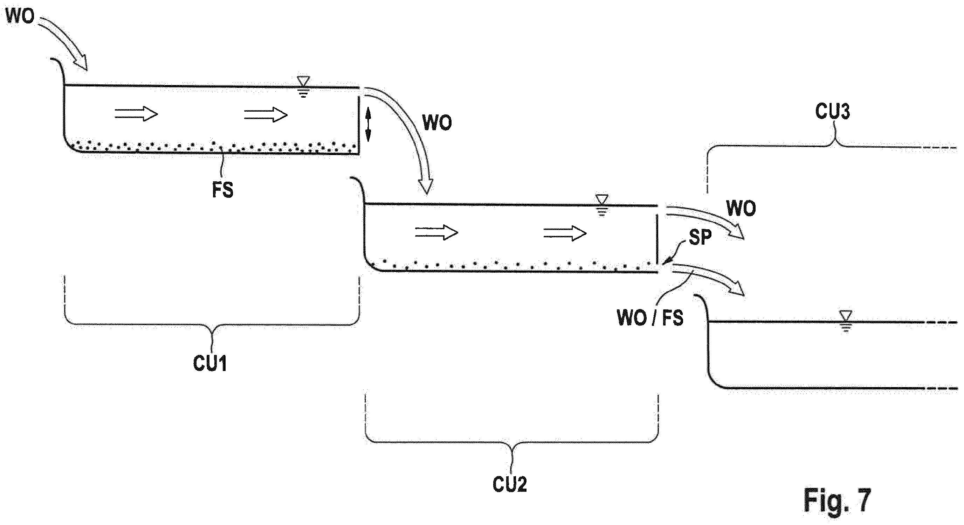

In Fig. 7 ist eine vorteilhafte Ausführungsform des Systems zum Klären einer Würze WO und/oder zum Einstellen einer vorbestimmten Trübung in der Würze WO. Das System weist drei der vorstehend beschriebenen Einrichtungen CU auf, die in Serie geschaltet sind. Bei dieser Kaskadenschaltung strömt die Würze durch die jeweilige Einrichtung CU durch, tritt im Bereich des jeweiligen Überlaufs über, verlässt die Einrichtung CU und wird im Bereich einer Einströmstelle in das Aufnahmegefäß BO der nächstfolgenden Einrichtung CU eingebracht. Je nach Einstellung des jeweiligen Überlaufs OF bzw. der eingestellten Spaltgröße kann am Ende der Kaskade je nach Bedarf eine mehr oder weniger trübe Würze mit einer entsprechenden Partikelfracht abgezogen werden.

Sowohl bei der Einrichtung CU gemäß Fig. 5/6, als auch bei dem System mit drei Vorrichtungen CU gemäß Fig. 7 strömt die Würze schwerkraftgetrieben durch die Vorrichtung bzw. das System.

Eine weitere, bevorzugte Ausführungsform der Erfindung, welche nicht als Figur dargestellt ist, besteht aus einem System mit vier erfindungsgemäßen Vorrichtungen (V1; V2; V3; V4), welche in Serie geschaltet sind. Jede der Vorrichtungen (V1; V2; V3; V4) weist dabei eine Trennvorrichtung (T1; T2; T3; T4) auf, welche zwei, im Wesentlichen parallel zueinander und im Raum senkrecht angeordneten, kreisrunden Siebplatten aufweist. Die Öffnungen OP der ersten bis vierten Trennvorrichtung (T1; T2; T3; T4) der Vorrichtungen (V1; V2; V3; V4) weisen eine Maschenweite/Siebgröße von etwa 75 µm auf. Die erste bis vierte Trennvorrichtung (T1; T2; T3; T4) ist jeweils drehbar gelagert und wird während des Betriebs jeweils mit einer Drehzahl von etwa 4 bis 5 Umdrehungen/min bewegt. Die Oberfläche (FA1; FA2; FA3; FA4) der jeweiligen Trennvorrichtung (T1; T2; T3; T4) ist je zu einem Anteil von 5 bis 15 % von der in der jeweiligen Vorrichtung zur trennenden Suspension bedeckt Maische MA in der ersten Vorrichtung V1; erste Restmaische RM1 in der zweiten Vorrichtung V2; zweite Restmaische RM2 in der dritten Vorrichtung V3; und dritte Restmaische RM3 in der vierten Vorrichtung V4.

Im Betrieb des vorstehend beschriebenen Systems wird die zu trennenden Maische mit einem Volumendurchsatz von 34 bis 40 l/min der ersten Vorrichtung V1 zugeführt. Die in der ersten Vorrichtung V1 gewonnene flüssige Phase wird als Würze bzw. Vorderwürze abgeführt. Die ferner entstehende erste Restmaische RM1 wird mit der in der dritten Vorrichtung V3 gewonnenen flüssigen Phase gemischt, wobei die Zugabe der flüssigen Phase zwischen der ersten Vorrichtung V1 und der zweiten Vorrichtung V2 erfolgt. Die derart verdünnte erste Restmaische RM1 wird der zweiten Vorrichtung V2 zugeführt. In der zweiten Vorrichtung V2 wird die von der verdünnten ersten Restmaische RM1 abgetrennten, flüssigen Phase als Nachguss abgeführt. Die verbleibende zweite Restmaische RM2 wird aus der zweiten Vorrichtung V2 abgeführt und mit der in der vierten Vorrichtung V4 gewonnenen flüssigen Phase gemischt. Dabei erfolgt die Zugabe der flüssigen Phase zwischen der zweiten Vorrichtung V2 und der dritten Vorrichtung V3. Die derart verdünnte zweite Restmaische RM2 wird in die dritte Vorrichtung V3 eingebracht und dort in eine flüssige Phase und eine dritte Restmaische RM3 aufgetrennt. Wie vorstehend beschrieben, wird diese flüssige Phase in einem Volumenstrom von 18 bis 20 l/min der ersten Restmaische RM1 zwischen der ersten Vorrichtung V1 und der zweiten Vorrichtung V2 zugesetzt.

Nach dem Austrag aus der dritten Vorrichtung V3 wird der dritten Restmaische RM3 zwischen der dritten Vorrichtung V3 und der vierten Vorrichtung V4 Frischwasser oder Brauwasser mit einem Volumenstrom von etwa 40 l/min zugesetzt. Die derart gewonnene Mischung wird in die vierte Vorrichtung V4 eingebracht. Dort wird diese Suspension in eine flüssige Phase und eine vierte Restmaische RM4 aufgetrennt. Die flüssige Phase wird, wie vorstehend beschrieben, der zweiten Restmaische RM2 zwischen der zweiten Vorrichtung V2 und der dritten Vorrichtung V3 in einem Volumenstrom von 18 bis 20 l/min zugesetzt. Die vierte Restmaische RM4 wird aus dem System ausgetragen und der weiteren Verwertung oder Entsorgung zugeführt. In der jeweiligen Vorrichtung (V1; V2; V3; V4) erfolgt die Auftrennung der Maische bzw. Restmaische jeweils mittels der jeweiligen Trennvorrichtung (T1; T2; T3; T4).

Die Erfinder haben festgestellt, dass bei der Gestaltung des erfindungsgemäßen Systems und der Durchführung des erfindungsgemäßen Verfahrens wie vorstehend beschrieben, eine gute Trennleistung bei der Würzegewinnung einschließlich einer guten Auswaschung der jeweiligen Restmaische mit hoher Extraktausbeute erzielt werden kann. Aufgrund der gewählten Drehgeschwindigkeit der Trennvorrichtungen kann eine hohe Trennleistung bei geringer elektrischer Leistungsaufnahme sichergestellt werden. Bei einer weiter verringerten Drehgeschwindigkeit der Trennvorrichtungen im vorstehend beschriebenen, beispielhaften System waren die Trennleistung und die Ausbeute vermindert. Werden höhere Drehgeschwindigkeiten eingestellt, steigen die elektrische Leistungsaufnahme und damit der Stromverbrauch an. Durch die kontinuierliche Fahrweise des Systems bei Auswaschung der jeweiligen Restmaische im Gegenstrom zum Extraktionsmittel wird der Wasserverbrauch verringert und damit die Wasserbilanz optimiert. Ferner wurde festgestellt, dass die erfindungsgemäß vorgeschlagene Würzegewinnung zu erhöhten Zink- und Fettsäuregehalten in der gewonnenen Würze führt. Hierdurch werden bei der anschließenden Vergärung der gewonnenen Würze die Hefevermehrung verbessert und die Gärung beschleunigt.

## Patentansprüche

1. Vorrichtung (V) zur Gewinnung einer Würze (WO) aus einer Maische (MA) in der Bierbrauerei oder Getränkeindustrie, wenigstens mit:
einer Aufnahmeeinrichtung (AG) zum Aufnehmen der Maische (MA);
wenigstens einer Trennvorrichtung (T) mit jeweils einer Oberfläche (FA);
wobei die Oberfläche (FA) eine Vielzahl von Öffnungen (OP) aufweist;
wobei die Vorrichtung (V) vorzugsweise geeignet ist, mittels der Oberfläche (FA) der Trennvorrichtung (T) die Maische (MA) in die Würze (WO) und eine Restmaische (RM) zu trennen;
wobei die Oberfläche (FA) oder ein Teil derselben mit der Maische (MA) in Kontakt bringbar ist, wenn die Maische (MA) zum Trennen in die Würze (WO) und die Restmaische (RM) in der Aufnahmeeinrichtung (AG) vorhanden ist; und
wobei die Oberfläche (FA) während des Betriebs der Vorrichtung (V) zur Maische (MA), zur Restmaische (RM) und/oder zur Aufnahmeeinrichtung (AG) relativ beweglich oder bewegbar oder drehbar angeordnet ist;
wobei die Vorrichtung (V) eine erste Trennvorrichtung (T11) und eine zweite Trennvorrichtung (T12) aufweist;
wobei die erste Trennvorrichtung (T11) eine erste Oberfläche (FA11) aufweist;
wobei die zweite Trennvorrichtung (T12) eine zweite Oberfläche (FA12) aufweist;
**dadurch gekennzeichnet, dass**
die erste Trennvorrichtung (T11) und die zweite Trennvorrichtung (T12) derart in der Vorrichtung (V) angeordnet sind, dass der größte, als Normalabstand gemessene Abstand zwischen der ersten Oberfläche (FA11) der ersten Trennvorrichtung (T11) und der zweiten Oberfläche (FA12) der zweiten Trennvorrichtung (T12) von 3 cm bis 50 cm ist; und
der kleinste, als Normalabstand gemessene Abstand zwischen der ersten Oberfläche (FA11) der ersten Trennvorrichtung (T11) und der zweiten Oberfläche (FA12) der zweiten Trennvorrichtung (T12) von 3 cm bis 50 cm ist.

2. Vorrichtung nach Anspruch 1, **dadurch gekennzeichnet, dass** die erste Trennvorrichtung (T11) und die zweite Trennvorrichtung (T12) jeweils als eine Trennvorrichtung mit einer drehbar gelagerten Welle oder als drehbar gelagerte Trennvorrichtung oder drehbar gelagertes Filter ausgeführt sind;
wobei die erste Trennvorrichtung (T11) und die zweite Trennvorrichtung (T12) jeweils derart in der Vorrichtung (V) angeordnet sind, dass die Mittelachse oder eine Drehachse von jeder der ersten Trennvorrichtung (T11) und der zweiten Trennvorrichtung (T12) oder von jeder der ersten Oberfläche (FA11) und der zweiten Oberfläche (FA12) im Wesentlichen parallel zu einem Flüssigkeitsspiegel einer in die Aufnahmeeinrichtung (AG) der Vorrichtung (V) eingefüllten Flüssigkeit angeordnet ist, oder die Mittelachse oder eine Drehachse von jeder der ersten Trennvorrichtung (T11) und der zweiten Trennvorrichtung (T12) oder von jeder der ersten Oberfläche (FA11) und der zweiten Oberfläche (FA12) mit einem Flüssigkeitsspiegel einer in die Aufnahmeeinrichtung (AG) der Vorrichtung (V) eingefüllten Flüssigkeit oder mit der Horizontalen einen Winkel mit einem Betrag von 0 bis 15 °, vorzugsweise 0 bis 10 °, insbesondere 0 bis 5 °, einschließt;
wobei die erste Trennvorrichtung (T11) und die zweite Trennvorrichtung (T12) in der Vorrichtung (V) und derart zueinander angeordnet sind, dass die Mittelachsen oder eine Drehachse von jeder der ersten Trennvorrichtung (T11) und der zweiten Trennvorrichtung (T12) oder von jeder der ersten Oberfläche (FA11) und der zweiten Oberfläche (FA12) einen Winkel mit einem Betrag von 0 bis 15 °, vorzugsweise 0 bis 10 °, insbesondere 0 bis 5 °, einschließen;
wobei die erste Trennvorrichtung (T11) und die zweite Trennvorrichtung (T12) derart in der Vorrichtung (V) angeordnet sind, dass der größte, vorzugsweise parallel zur Drehwelle oder als Normalabstand gemessene Abstand zwischen der ersten Oberfläche (FA11) der ersten Trennvorrichtung (T11) und der zweiten Oberfläche (FA12) der zweiten Trennvorrichtung (T12) von 5 bis 25 cm, vorzugsweise 10 bis 20 cm, ist; und
wobei der kleinste, vorzugsweise parallel zur Drehwelle oder als Normalabstand gemessene Abstand zwischen der ersten Oberfläche (FA11) der ersten Trennvorrichtung (T11) und der zweiten Oberfläche (FA12) der zweiten Trennvorrichtung (T12) von 5 bis 25 cm, vorzugsweise 10 bis 20 cm, ist.

3. Vorrichtung nach Anspruch 1 oder 2, **dadurch gekennzeichnet, dass** die erste Trennvorrichtung (T11) und die zweite Trennvorrichtung (T12) derart in der Vorrichtung (V) angeordnet sind, dass der größte, vorzugsweise als Normalabstand gemessene Abstand zwischen der ersten Oberfläche (FA11) und einer Wand der Vorrichtung (V), vorzugsweise der Aufnahmeeinrichtung (AG), und zwischen der zweiten Oberfläche (FA12) und der Wand der Vorrichtung (V), vorzugsweise der Aufnahmeeinrichtung (AG), von 5 bis 30 cm, vorzugsweise 10 bis 20 cm, ist; und/oder
der kleinste, vorzugsweise als Normalabstand gemessene Abstand zwischen der ersten Oberfläche (FA11) und einer Wand der Vorrichtung (V), vorzugsweise der Aufnahmeeinrichtung (AG), und zwischen der zweiten Oberfläche (FA12) und der Wand der Vorrichtung (V), vorzugsweise der Aufnahmeeinrichtung (AG), von > 2 bis 25 cm, vorzugsweise 10 bis 20 cm, ist.

4. Vorrichtung (V) nach einem der Ansprüche 1 bis 3 oder aufweisend ein Merkmal definiert in einem der Ansprüche 1 bis 3, wenigstens mit:
einer wannenartigen Aufnahmeeinrichtung (AG) zum Aufnehmen der Maische (MA);
wobei die erste Trennvorrichtung (T11) und die zweite Trennvorrichtung (T12) jeweils als drehbar gelagertes, scheibenförmiges oder zylindrisches Filter ausgebildet ist;
wobei die erste Oberfläche (FA11) die Grundfläche der ersten Trennvorrichtung (T11) ist;
wobei die zweite Oberfläche (FA12) die Grundfläche der zweiten Trennvorrichtung (T12) ist;
wobei die erste Oberfläche (FA11) und die zweite Oberfläche (FA12) jeweils als ebene oder im Wesentlichen ebene Filterfläche mit einer Vielzahl von Öffnungen (OP) ausgebildet sind;
wobei die Vorrichtung (V) vorzugsweise geeignet ist, mittels der ersten Oberfläche (FA11) und der zweiten Oberfläche (FA12) die Maische (MA) in die Würze (WO) und eine Restmaische (RM) zu trennen;
wobei die Drehachse der ersten Trennvorrichtung (T11) senkrecht oder im Wesentlichen senkrecht zur ersten Oberfläche (FA11) angeordnet ist;
wobei die Drehachse der zweiten Trennvorrichtung (T12) senkrecht oder im Wesentlichen senkrecht zur zweiten Oberfläche (FA12) angeordnet ist;
wobei die Drehachse der ersten Trennvorrichtung (T11) mit dem Flüssigkeitsspiegel einer in die Aufnahmeeinrichtung (AG) eingefüllten Flüssigkeit oder mit der Horizontalen einen Winkel mit einem Betrag von 0 bis 10 °, insbesondere 0 bis 5 °, einschließt;
wobei die Drehachse der zweiten Trennvorrichtung (T12) mit dem Flüssigkeitsspiegel einer in die Aufnahmeeinrichtung (AG) eingefüllten Flüssigkeit oder mit der Horizontalen einen Winkel mit einem Betrag von 0 bis 10 °, insbesondere 0 bis 5 °, einschließt; wobei die erste Trennvorrichtung (T11) und die zweite Trennvorrichtung (T12) derart in der Vorrichtung (V) angeordnet sind, dass der Normalabstand zwischen der ersten Oberfläche (FA11) der ersten Trennvorrichtung (T11) und der zweiten Oberfläche (FA12) der zweiten Trennvorrichtung (T12) von 5 bis 25 cm, vorzugsweise 10 bis 20 cm, ist; und
wobei die erste Trennvorrichtung (T11) und die zweite Trennvorrichtung (T12) jeweils derart zur Aufnahmeeinrichtung (AG) angeordnet ist, dass während des Betriebs der Vorrichtung (V) zum Trennen der Maische (MA) die erste Oberfläche (FA11) und die zweite Oberfläche (FA12) jeweils zu einem Anteil von 1 bis 95 %, vorzugsweise 5 bis 20 %, vorzugsweise 5 bis 15 %, vorzugsweise 5 bis 10 %, vorzugsweise 20 bis 70 %, vorzugsweise 20 bis 50 %, insbesondere 30 bis 40 %, von der Maische (MA) bedeckt sind oder in die Maische (MA) eintauchen, wenn die Maische (MA) in der Aufnahmeeinrichtung (AG) vorhanden ist; und
wobei die erste Oberfläche (FA11) und die zweite Oberfläche (FA12) jeweils im Umfang des restlichen Anteils in einen gasgefüllten Raum (GR) oberhalb der Maische (MA) angeordnet sind oder darin hineinragen;
wobei die erste Oberfläche (FA11) und die zweite Oberfläche (FA12) oder ein Teil derselben mit der Maische (MA) in Kontakt bringbar ist, wenn die Maische (MA) zum Trennen in die Würze (WO) und die Restmaische (RM) in der Aufnahmeeinrichtung (AG) vorhanden ist;
wobei die erste Oberfläche (FA11) und die zweite Oberfläche (FA12) während des Betriebs der Vorrichtung (V) zur Maische (MA), zur Restmaische (RM) und/oder zur Aufnahmeeinrichtung (AG) relativ beweglich oder bewegbar oder drehbar angeordnet sind.

5. System zur Gewinnung einer Würze (WO) aus einer Maische (MA) in der Bierbrauerei oder Getränkeindustrie, wenigstens mit:
einer ersten Vorrichtung (V1), wobei die erste Vorrichtung (V1) eine Vorrichtung (V) nach einem der Ansprüche 1 bis 4 ist; und
wobei die erste Vorrichtung (V1) mittels einer ersten Steuervorrichtung (C1) vorzugsweise derart steuerbar ist, dass eine relative Bewegung oder Drehbewegung der ersten Oberfläche (FA11) und der zweiten Oberfläche (FA12) während der gesamten Dauer des Trennens der Maische (MA) erfolgt.

6. System nach Anspruch 5, **dadurch gekennzeichnet, dass** die erste Trennvorrichtung (T11) und die zweite Trennvorrichtung (T12) derart zur ersten Aufnahmeeinrichtung (AG1) angeordnet sind, dass während des Betriebs der ersten Vorrichtung (V1) zum Trennen der Maische (MA) die erste Oberfläche (FA11) und die zweite Oberfläche (FA12) jeweils zu einem Anteil von 1 bis 95 %, vorzugsweise 5 bis 20 %, vorzugsweise 5 bis 15 %, vorzugsweise 5 bis 10 %, vorzugsweise 20 bis 70 %, von der Maische (MA) bedeckt sind oder in die Maische (MA) eintauchen, wenn die Maische (MA) in der ersten Aufnahmeeinrichtung (AG1) vorhanden ist; und
die erste Oberfläche (FA11) und die zweite Oberfläche (FA12) jeweils im Umfang des restlichen Anteils vorzugsweise in einem ersten gasgefüllten Raum (GR1) oberhalb der Maische (MA) angeordnet sind oder darin hineinragen.

7. System nach Anspruch 5 oder 6, **dadurch gekennzeichnet, dass** es ferner aufweist:
eine zweite Vorrichtung (V2), wobei die zweite Vorrichtung (V2) eine Vorrichtung (V) nach einem der Ansprüche 1 bis 4 ist;
wobei die zweite Vorrichtung (V2) einer erste Trennvorrichtung (T21) und eine zweite Trennvorrichtung (T22) aufweist;
wobei die erste Trennvorrichtung (T21) eine erste Oberfläche (FA21) aufweist;
wobei die zweite Trennvorrichtung (T22) eine erste Oberfläche (FA22) aufweist;
wobei die zweite Vorrichtung (V2) mittels einer zweiten Steuervorrichtung (C2) vorzugsweise derart steuerbar ist, dass die relative Bewegung der ersten Oberfläche (FA21) und der zweiten Oberfläche (FA22) während der gesamten Dauer des Trennens der ersten Restmaische (RM1) erfolgt; und
wobei das System vorzugsweise eine erste Einrichtung (WZ1) zum Zuführen von Wasser oder einer verdünnten Würze, vorzugsweise einer dritten Würze (WO3), aufweist.

8. System nach Anspruch 7, **dadurch gekennzeichnet, dass** die erste Trennvorrichtung (T21) und die zweite Trennvorrichtung (T22) der zweiten Vorrichtung (V2) derart zur zweiten Aufnahmeeinrichtung (AG2) angeordnet ist, dass die erste Oberfläche (FA21) der ersten Trennvorrichtung (T21) und die zweite Oberfläche (FA22) der zweiten Trennvorrichtung (T22) während des Betriebs der zweiten Vorrichtung (V2) zum Trennen der ersten Restmaische (RM1) zu einem Anteil von 1 bis 95 %, vorzugsweise 5 bis 20 %, vorzugsweise 5 bis 15 %, vorzugsweise 5 bis 10 %, vorzugsweise 20 bis 70 %, von der ersten Restmaische (RM1) bedeckt sind oder in die erste Restmaische (RM1) eintauchen, wenn die erste Restmaische (RM1) in der zweiten Aufnahmeeinrichtung (AG2) vorhanden ist; und
der restliche Anteil der ersten Oberfläche (FA21) und der zweiten Oberfläche (FA22) jeweils vorzugsweise in einem zweiten gasgefüllten Raum (GR2) angeordnet sind oder darin hineinragen, wobei der zweite gasgefüllten Raum (GR2) über oder oberhalb der ersten Restmaische (RM1) angeordnet ist.

9. System nach einem der Ansprüche 5 bis 8, **dadurch gekennzeichnet, dass** das System eine erste Einrichtung (WZ1), eine zweite Einrichtung (WZ2) und/oder eine dritte Einrichtung (WZ3) jeweils zum Zuführen von Wasser oder einer verdünnten Würze aufweist; und
wobei die erste Einrichtung (WZ1) vorzugsweise derart im System angeordnet ist, dass das Wasser oder die verdünnte Würze der Maische oder der ersten Restmaische (RM1) in der ersten Vorrichtung (V1) und/oder stromabwärts zur ersten Vorrichtung (V1) und stromaufwärts zur zweiten Vorrichtung (V2) und/oder in der zweiten Vorrichtung (V2), zugeführt wird; und/oder
wobei die zweite Einrichtung (WZ2) vorzugsweise derart im System angeordnet ist, dass das Wasser oder die verdünnte Würze der zweiten Restmaische (RM2) in der zweiten Vorrichtung (V2) und/oder stromabwärts zur zweiten Vorrichtung (V2) und stromaufwärts zur dritten Vorrichtung (V3) und/oder in der dritten Vorrichtung (V3) zugeführt wird; und/oder
wobei die dritte Einrichtung (WZ3) vorzugsweise derart im System angeordnet ist, dass das Wasser oder die verdünnte Würze einer dritten Restmaische (RM3) in der dritten Vorrichtung (V3) und/oder stromabwärts zur dritten Vorrichtung (V3) und stromaufwärts zu einer vierten Vorrichtung (V4) und/oder in der vierten Vorrichtung (V4) zugeführt wird.

10. System nach Anspruch 9, **dadurch gekennzeichnet, dass** die erste Einrichtung (WZ1), die zweite Einrichtung (WZ2) und/oder die dritte Einrichtung (WZ3) jeweils als Auslassöffnung, vorzugsweise als Düse, insbesondere als Flachstrahldüse, Sprühkopf, oder Sprühkugel, ausgebildet sind.

11. System nach einem der Ansprüche 7 bis 10, **dadurch gekennzeichnet, dass** das System wenigstens ein Stauelement aufweist;
wobei vorzugsweise ein erstes Stauelement stromabwärts zur ersten Vorrichtung (V1) und stromaufwärts zur zweiten Vorrichtung (V2) angeordnet ist; und/oder
wobei vorzugsweise ein zweites Stauelement stromabwärts zur zweiten Vorrichtung (V2) und stromaufwärts zur dritten Vorrichtung (V3) angeordnet ist; und/oder
wobei vorzugsweise ein drittes Stauelement stromabwärts zur dritten Vorrichtung (V3) und stromaufwärts zur vierten Vorrichtung (V4) angeordnet ist.

12. Verfahren zur Gewinnung einer Würze aus einer Maische in der Bierbrauerei oder Getränkeindustrie, mit den Schritten:
(a) Zuführen einer Maische (MA) zu einer ersten Aufnahmeeinrichtung (AG1) einer ersten Vorrichtung (V1), wobei die erste Vorrichtung (V1) eine Vorrichtung (V) nach einem der Ansprüche 1 bis 4 ist;
(b) Trennen der Maische (MA) in der ersten Vorrichtung (V1) in eine erste Würze (WO1) und eine erste Restmaische (RM1), mittels Trennen oder Filtrieren der Maische (MA) unter Zuhilfenahme der ersten Oberfläche (FA11) der ersten Trennvorrichtung (T11) und der zweiten Oberfläche (FA12) der zweiten Trennvorrichtung (T12) der ersten Vorrichtung (V1);
wobei das Filtrat oder Permeat die erste Würze (WO1) und der Filterrückstand oder Retentat die erste Restmaische (RM1) ist;
wobei das Trennen durch den hydrostatischen Druck der Maische (MA) und/oder einen anderen auf die Maische (MA) einwirkenden Druck und/oder einen auf die erste Restmaische (RM1) einwirkenden Unterdruck angetrieben wird;
wobei sich während des Trennens der Maische (MA) in die erste Würze (WO1) und die erste Restmaische (RM1) die erste Oberfläche (FA11) und die zweite Oberfläche (FA12) jeweils zur in der ersten Vorrichtung (V1) vorhandenen Maische (MA), zur in der ersten Vorrichtung (V1) vorhandenen, ersten Restmaische (RM1) und/oder zur ersten Aufnahmeeinrichtung (AG1) relativ bewegt, oder die erste Oberfläche (FA11) sich während des Trennens der Maische (MA) um eine erste Achse (AX11) der ersten Trennvorrichtung (T11) der ersten Vorrichtung (V1) dreht und die zweite Oberfläche (FA12) sich während des Trennens der Maische (MA) um eine zweite Achse (AX21) der zweiten Trennvorrichtung (T12) der ersten Vorrichtung (V1) dreht; und
wobei die relative Bewegung oder die Drehbewegung der ersten Oberfläche (FA11) und der zweiten Oberfläche (FA12) während der gesamten Dauer des Trennens der Maische (MA) ununterbrochen oder zeitweise, vorzugsweise in regelmäßigen zeitlichen Intervallen, erfolgt.

13. Verfahren nach Anspruch 12, ferner mit den Schritten:
(c) Mischen von Wasser oder einer verdünnten Würze, vorzugsweise der dritten Würze (WO3), mit der bei der Trennung gemäß Schritt (b) erhaltenen ersten Restmaische (RM1) in einem vordefinierten Volumenstromverhältnis, wobei ein erstes Gemisch (MX1) erhalten wird;
(d) vor Schritt (c): Zuführen der ersten Restmaische (RM1) zur zweiten Aufnahmeeinrichtung (AG2) der zweiten Vorrichtung (V2); oder
nach Schritt (c): Zuführen des ersten Gemischs (MX1) zur zweiten Aufnahmeeinrichtung (AG2) der zweiten Vorrichtung (V2);
wobei die zweite Vorrichtung (V2) eine Vorrichtung (V) nach einem der Ansprüche 1 bis 4 ist;
(e) Trennen des so erhaltenen ersten Gemischs (MX1) in eine zweite Würze (WO2) und eine zweite Restmaische (RM2), mittels einer ersten Trennvorrichtung (T21) und einer zweiten Trennvorrichtung (T22) der zweiten Vorrichtung (V2) oder mittels Trennen oder Filtrieren des ersten Gemischs (MX1) unter Zuhilfenahme der ersten Oberfläche (FA21) der ersten Trennvorrichtung (T21) und der zweiten Oberfläche (FA22) der zweiten Trennvorrichtung (T22) in der zweiten Vorrichtung (V2);
wobei das Filtrat oder Permeat die zweite Würze (WO2) und der Filterrückstand oder das Retentat die zweite Restmaische (RM2) ist;
wobei das Trennen durch den hydrostatischen Druck des ersten Gemischs (MX1) und/oder einen anderen auf das erste Gemisch (MX1) einwirkenden Druck und/oder einen auf die zweite Restmaische (RM2) einwirkenden Unterdruck angetrieben wird;
wobei sich während des Trennens des ersten Gemischs (MX1) in die zweite Würze (WO2) und die zweite Restmaische (RM2) die erste Oberfläche (FA21) der ersten Trennvorrichtung (T21) und die zweite Oberfläche (FA22) der zweiten Trennvorrichtung (T22) der zweiten Vorrichtung (V2) relativ zu dem in der zweiten Vorrichtung (V2) vorhandenen ersten Gemisch (MX1), zur in der zweiten Vorrichtung (V2) vorhandenen, zweiten Restmaische (RM2) und/oder zur zweiten Aufnahmeeinrichtung (AG2) bewegt oder
sich während des Trennens des ersten Gemischs (MX1) in die zweite Würze (WO2) und die zweite Restmaische (RM2) die erste Oberfläche (FA21) der ersten Trennvorrichtung (T21) der zweiten Vorrichtung (V2) um eine erste Achse (AX21) der ersten Trennvorrichtung (T21) der zweiten Vorrichtung (V2) und die zweite Oberfläche (FA22) der zweiten Trennvorrichtung (T22) der zweiten Vorrichtung (V2) um eine zweite Achse (AX22) der zweiten Trennvorrichtung (T22) der zweiten Vorrichtung (V2) dreht; und
wobei die relative Bewegung oder die Drehbewegung der ersten Oberfläche (FA21) und der zweiten Oberfläche (FA22) während der gesamten Dauer des Trennens des ersten Gemischs (MX1) ununterbrochen oder zeitweise, vorzugsweise in regelmäßigen zeitlichen Intervallen, erfolgt.

14. Verwendung einer Vorrichtung (V) nach einem der Ansprüche 1 bis 4 oder eines Systems (S) nach einem der Ansprüche 5 bis 11 zur kontinuierlichen oder diskontinuierlichen Gewinnung einer Würze (WO) aus einer Maische (MA) in der Bierbrauerei oder Getränkeindustrie; oder
zur kontinuierlichen oder diskontinuierlichen Gewinnung einer verdünnten Würze aus einer Restmaische (RM) oder einem Treber oder einem Gemisch enthaltend Wasser und Restmaische (RM) oder Treber; oder
zum Hopfen einer Würze, eines Bieres, eines sonstigen alkoholhaltigen oder alkoholfreien Getränks oder einer Vorstufe derselben.

## Claims

1. A device (V) for obtaining a wort (WO) from a mash (MA) in beer brewing or beverage manufacturing; at least comprising:
a receiving unit (AG) for receiving the mash (MA);
at least one separating device (T), each having a surface (FA);
the surface (FA) having a multiplicity of openings (OP);
the device (V) being preferably configured to separate the mash (MA) into the wort (WO) and a residual mash (RM) by means of the surface (FA) of the separating device (T);
wherein the surface (FA) or a part thereof can be brought into contact with the mash (MA) when the mash (MA) is present in the receiving unit (AG) for separation into the wort (WO) and the residual mash (RM); and
wherein the surface (FA) is arranged movably or rotatably in relation to the mash (MA), the residual mash (RM) and/or the receiving unit (AG) during the operation of the device (V);
wherein the device (V) has a first separating device (T11) and a second separating device (T12);
wherein the first separating device (T11) has a first surface (FA11);
wherein the second separating device (T12) has a second surface (FA12);
**characterized in that**
the first separating device (T11) and the second separating device (T12) are arranged in the device (V) in such a manner that the largest distance between the first surface (FA11) of the first separating device (T11) and the second surface (FA12) of the second separating device (T12), measured as a normal distance, is from 3 cm to 50 cm; and
the shortest distance measured between the first surface (FA11) of the first separating device (T11) and the second surface (FA12) of the second separating device (T12), measured as the normal distance, is from 3 cm to 50 cm.

2. The device according to claim 1, **characterized in that** the first separating device (T11) and the second separating device (T12) are each formed as a separating device with a rotatably mounted shaft or as a rotatably mounted separating device or a rotatably mounted filter;
wherein the first separating device (T11) and the second separating device (T12) are each arranged in the device (V) in such a manner that the central axis or a rotation axis of each of the first separating device (T11) and of the second separating device (T12) or of each of the first surface (FA11) and of the second surface (FA12) is essentially arranged in parallel to a liquid level of a liquid filled in the receiving unit (AG) of the device (V), or the central axis or a rotation axis of each of the first separating device (T11) and of the second separating device (T12) or of each of the first surface (FA11) and of the second surface (FA12) with a liquid level of a liquid filled in the receiving unit (AG) of the device (V) or with the horizontal includes an angle having an absolute value from 0 to 15°, preferably 0 to 10°, especially 0 to 5°;
wherein the first separating device (T11) and the second separating device (T12) are arranged in the device (V) and in such a relation to one another that the central axes or a rotation axis of each of the first separating device (T11) and the second separating device (T12) or of each of the first surface (FA11) and the second surface (FA12) include an angle having an absolute value from 0 to 15°, preferably 0 to 10°, especially 0 to 5°;
wherein the first separating device (T11) and the second separating device (T12) are arranged in the device (V) in such a manner that the largest distance, preferably measured in parallel to the rotation shaft or as the normal distance, between the first surface (FA11) of the first separating device (T11) and the second surface (FA12) of the second separating device (T12) is from 5 to 25 cm, preferably 10 to 20 cm; and
wherein the shortest distance, preferably measured in parallel to the rotation shaft or as the normal distance between the first surface (FA11) of the first separating device (T11) and the second surface (FA12) of the second separating device (T12), is from 5 to 25 cm , preferably 10 to 20 cm.

3. The device according to claim 1 or 2, **characterized in that** the first separating device (T11) and the second separating device (T12) are arranged in the device (V) in such a manner that the largest distance, preferably measured as the normal distance, between the first surface (FA11) and a wall of the device (V), preferably the receiving unit (AG), and between the second surface (FA12) and the wall of the device (V), preferably the receiving unit (AG), is from 5 to 30 cm, preferably 10 to 20 cm; and/or
the shortest distance, preferably measured as the normal distance, between the first surface (FA11) and a wall of the device (V), preferably the receiving unit (AG), and between the second surface (FA12) and the wall of the device (V), preferably the receiving unit (AG), is > 2 to 25 cm, preferably 10 to 20 cm.

4. The device (V) according to any one of claims 1 to 3 or comprising a feature as defined in any one of claims 1 to 3, at least comprising:
a tub-like receiving unit (AG) for receiving the mash (MA);
wherein the first separating device (T11) and the second separating device (T12) is respectively formed as a rotatably mounted, disk-shaped or cylindrical filter;
wherein the first surface (FA11) is a base surface of the first separating device (T 11);
wherein the second surface (FA12) is the base surface of the second separating device (T12);
wherein the first surface (FA11) and the second surface (FA12) are each formed as a flat or a substantially flat filtering surface having a multiplicity of openings (OP);
wherein the device (V) is preferably suitable for separating the mash (MA) into the wort (WO) and a residual mash (RM) by means of the first surface (FA11) and the second surface (FA12);
wherein the rotation axis of the first separating device (T11) is arranged perpendicularly or substantially perpendicularly to the first surface (FA11);
wherein the rotation axis of the second separating device (T12) is arranged perpendicularly or substantially perpendicularly to the second surface (FA12);
wherein the rotation axis of the first separating device (T11) with the liquid level of a liquid filled in the receiving unit (AG) or with the horizontal includes an angle having an absolute value from 0 to 10°, especially 0 to 5°;
wherein the rotation axis of the second separating device (T12) with the liquid level of a liquid filled in the receiving unit (AG) or with the horizontal includes an angle having an absolute value from 0 to 10°, especially 0 to 5°;
wherein the first separating device (T11) and the second separating device (T12) are arranged in the device (V) in such a manner that the normal distance between the first surface (FA11) of the first separating device (T11) and the second surface (FA12) of the second separating device (T12) is from 5 to 25 cm, preferably 10 to 20 cm; and
wherein the first separating device (T11) and the second separating device (T12) are arranged with respect to the receiving unit (AG) such that during operation of the device (V) for separating the mash (MA) the first surface (FA11) and the second surface (FA12) are each covered by the mash (MA) or are immersed in the mash (MA) at a proportion of 1 to 95%, preferably 5 to 20%, preferably 5 to 15%, preferably 5 to 10%, preferably 20 to 70%, preferably 20 to 50%, especially 30 to 40%, if the mash (MA) is present in the receiving unit (AG); and
wherein the first surface (FA11) and the second surface (FA12) are each arranged with respect to the residual portion in a gas-filled space (GR) above the mash (MA) or protrude therein;
wherein the first surface (FA11) and the second surface (FA12) or a portion thereof can be brought into contact with the mash (MA), if the mash (MA) is present in the receiving unit (AG) for separation into the wort (WO) and the residual mash (RM);
wherein, during operation of the device (V), the first surface (FA11) and the second surface (FA12) are arranged such that they are movable or rotatable relative to the mash (MA), the residual mash (RM) and/or the receiving unit (AG).

5. A system for obtaining a wort (WO) from a mash (MA) in beer brewing or beverage manufacturing, comprising at least:
a first device (V1), wherein the first device (V1) is a device (V) according to any one of claims 1 to 4; and
wherein the first device (V1) can be controlled preferably in such a manner by a first control device (C1) that a relative movement or rotational movement of the first surface (FA11) and the second surface (FA12) occurs during the entire duration of the separation of the mash (MA).

6. The system according to claim 5, **characterized in that** the first separating device (T11) and the second separating device (T12) are arranged in relation to the first receiving unit (AG) in such a manner that, during the operation of the first device (V1) for separating the mash (MA), the first surface (FA11) and the second surface (FA12) are each covered by the mash (MA) or are immersed in the mash (MA) at a proportion of 1 to 95%, preferably 5 to 20%, preferably 5 to 15%, preferably 5 to 10%, preferably 20 to 70%, if the mash (MA) is present in the first receiving unit (AG1); and
the first surface (FA11) and the second surface (FA12) are each preferably arranged with respect to the residual portion in a first gas-filled space (GR1) above the mash (MA) or protrude therein.

7. The system according to claim 5 or 6, **characterized in that** it further comprises:
a second device (V2), wherein the second device (V2) is a device (V) according to any one of claims 1 to 4;
wherein the second device (V2) has a first separating device (T21) and a second separating device (T22);
wherein the first separating device (T21) has a first surface (FA21);
wherein the second separating device (T22) has a first surface (FA22);
wherein the second device (V2) can be controlled preferably in such a manner by a second control device (C2) that the relative movement of the first surface (FA21) and the second surface (FA22) occurs during the entire duration of the separation of the first residual mash (RM1); and
wherein the system preferably has a first means (WZ1) for supplying water or a diluted wort, preferably a third wort (WO3).

8. The system according to claim 7, **characterized in that** the first separating device (T21) and the second separating device (T22) of the second device (V2) are arranged in relation to the second receiving unit (AG2) in such a manner that, during the operation of the second device (V2) for separating the first residual mash (RM1), the first surface (FA21) of the first separating device (T21) and the second surface (FA22) of the second separating device (T22) are each covered by the first residual mash (RM1) or are immersed in the first residual mash (RM1) at a proportion of 1 to 95%, preferably 5 to 20%, preferably 5 to 15%, preferably 5 to 10%, preferably 20 to 70%, if the first residual mash (RM1) is present in the second receiving unit (AG2); and
the residual portion of the first surface (FA21) and the second surface (FA22) are each preferably arranged in a second gas-filled space (GR2) or protrude therein, wherein the second gas-filled space (GR2) is arranged above the first residual mash (RM1).

9. The system according to any one of claims 5 to 8, **characterized in that** the system has a first means (WZ1), a second means (WZ2), and/or a third means (WZ3), each for supplying water or a diluted wort; and
wherein the first means (WZ1) is preferably arranged in the system in such a manner that the water or the diluted wort is supplied to the mash or the first residual mash (RM1) in the first device (V1) and/or downstream of the first device (V1) and upstream of the second device (V2) and/or in the second device (V2); and/or
wherein the second means (WZ2) is preferably arranged in the system in such a manner that the water or the diluted wort is supplied to the second residual mash (RM2) in the second device (V2) and/or downstream of the second device (V2) and upstream of the third device (V3) and/or in the third device (V3); and/or
wherein the third means (WZ3) is preferably arranged in the system in such a manner that the water or the diluted wort is supplied to a third residual mash (RM3) in the third device (V3) and/or downstream of the third device (V3) and upstream of a fourth device (V4) and/or in the fourth device (V4).

10. The system according to claim 9, **characterized in that** the first means (WZ1), the second means (WZ2), and/or the third means (WZ3) are each formed as an outlet opening, preferably as a nozzle, especially as a flat spray nozzle, a spray head, or a spray ball.

11. The system according to any one of claims 7 to 10, **characterized in that** the system has at least one damming member;
wherein a first damming member is preferably arranged downstream of the first device (V1) and upstream of the second device (V2); and/or
wherein a second damming member is preferably arranged downstream of the second device (V2) and upstream of the third device (V3); and/or
wherein a third damming member is preferably arranged downstream of the third device (V3) and upstream of the fourth device (V4).

12. A method for obtaining a wort from a mash in beer brewing or beverage manufacturing; comprising the following steps:
(a) supplying a mash (MA) to a first receiving unit (AG1) of a first device (V1), wherein the first device (V1) is a device (V) according to any one of claims 1 to 4;
(b) separating the mash (MA) in the first device (V1) into a first wort (WO1) and a first residual mash (RM1) by separating or filtering the mash (MA) with the aid of the first surface (FA11) of the first separating device (T11) and the second surface (FA12) of the second separating device (T12) of the first device (V1);
wherein the filtrate or permeate is the first wort (WO1) and the filter residue or retentate is the first residual mash (RM1);
wherein the separation is driven by hydrostatic pressure of the mash (MA) and/or another pressure acting upon the mash (MA) and/or a negative pressure acting upon the first residual mash (RM1);
wherein, during the separation of the mash (MA) into the first wort (WO1) and the first residual mash (RM1), the first surface (FA11) and the second surface (FA12) each move relative to the mash (MA) present in the first device (V1), to the first residual mash (RM1) present in the first device (V1) and/or to the first receiving unit (AG1), or the first surface (FA11) rotates during separation of the mash (MA) about a first axis (AX11) of the first separating device (T11) of the first device (V1) and the second surface (FA12) rotates during separation of the mash (MA) about a second axis (AX21) of the second separating device (T12) of the first device (V1); and
wherein relative movement or rotational movement of the first surface (FA11) and the second surface (FA12) is effected in an uninterrupted or intermittent manner, preferably in regular temporal intervals, during an entire period of separation of the mash (MA).

13. The method according to claim 12, further comprising the following steps:
(c) mixing water or a diluted wort, preferably of the third wort (WO3), with the first residual mash (RM1), obtained in the separation according to step (b), in a predefined volumetric flow ratio, wherein a first mixture (MX1) is obtained;
(d) prior to step (c): supplying the first residual mash (RM1) to the second receiving unit (AG2) of the second device (V2); or
after step (c): supplying the first mixture (MX1) to the second receiving unit (AG2) of the second device (V2);
wherein the second device (V2) is a device (V) according to any one of claims 1 to 4;
(e) separating the thus obtained first mixture (MX1) into a second wort (WO2) and a second residual mash (RM2) by a first separating device (T21) and a second separating device (T22) of the second device (V2) or by separating or filtering the first mixture (MX1) with the aid of the first surface (FA21) of the first separating device (T21) and the second surface (FA22) of the second separating device (T22) in the second device (V2);
wherein the filtrate or permeate is the second wort (WO2) and the filter residue or retentate is the second residual mash (RM2);
wherein the separation is driven by hydrostatic pressure of the first mixture (MX1) and/or another pressure acting upon the first mixture (MX1) and/or a negative pressure acting upon the second residual mash (RM2);
wherein, during the separation of the first mixture (MX1) into the second wort (WO2) and the second residual mash (RM2), the first surface (FA21) of the first separating device (T21) and the second surface (FA22) of the second separating device (T22) of the second device (V2) move relative to the first mixture (MX1) present in the second device (V2), to the second residual mash (RM2) present in the second device (V2) and/or to the second receiving unit (AG2), or
the first surface (FA21) of the first separating device (T21) of the second device (V2) rotates during separation of the first mixture (MX1) into the second wort (WO2) and the second residual mash (RM2) about a first axis (AX21) of the first separating device (T21) of the second device (V2) and the second surface (FA22) of the second separating device (T22) of the second device (V2) rotates about a second axis (AX22) of the second separating device (T22) of the second device (V2); and
wherein relative movement or rotational movement of the first surface (FA21) and the second surface (FA22) is effected in an uninterrupted or intermittent manner, preferably in regular temporal intervals, during the entire period of separation of the first mixture (MX1).

14. A use of a device (V) according to any one of claims 1 to 4 or a system (S) according to any one of claims 5 to 11 for continuously or discontinuously obtaining a wort (WO) from a mash (MA) in beer brewing or beverage manufacturing; or
for continuously or discontinuously obtaining a diluted wort from a residual mash (RM) or from spent grains or a mixture containing water and residual mash (RM) or spent grains; or
for hopping a wort, a beer, another alcoholic or a non-alcoholic beverage, or a precursor thereof.

## Revendications

1. Dispositif (V) pour obtenir un moût (WO) à partir d'une trempe (MA) dans la brasserie ou l'industrie des boissons, comprenant au moins :
un organe de réception (AG) pour recevoir la trempe (MA) ;
au moins un dispositif de séparation (T) ayant une surface respective (FA) ;
dans lequel
la surface (FA) présente une pluralité d'ouvertures (OP) ;
le dispositif (V) est de préférence apte à séparer, au moyen de la surface (FA) du dispositif de séparation (T), la trempe (MA) en moût (WO) et en trempe résiduelle (RM) ;
la surface (FA) ou une partie de celle-ci peut être mise en contact avec la trempe (MA), lorsque la trempe (MA) est située dans l'organe de réception (AG) en vue d'être séparée en moût (WO) et en trempe résiduelle (RM); et pendant le fonctionnement du dispositif (V), la surface (FA) est disposée de manière mobile ou déplaçable ou rotative par rapport à la trempe (MA), par rapport à la trempe résiduelle (RM) et/ou par rapport à l'organe de réception (AG) ;
le dispositif (V) comprend un premier dispositif de séparation (T11) et un deuxième dispositif de séparation (T12) ;
le premier dispositif de séparation (T11) présente une première surface (FA11) ;
le deuxième dispositif de séparation (T12) présente une deuxième surface (FA12) ;
**caractérisé en ce que**
le premier dispositif de séparation (T11) et le deuxième dispositif de séparation (T12) sont disposés dans le dispositif (V) de telle sorte que la plus grande distance, mesurée comme distance normale, entre la première surface (FA11) du premier dispositif de séparation (T11) et la deuxième surface (FA12) du deuxième dispositif de séparation (T12) est dans la plage de 3 cm à 50 cm ; et
la plus petite distance, mesurée comme distance normale, entre la première surface (FA11) du premier dispositif de séparation (T11) et la deuxième surface (FA12) du deuxième dispositif de séparation (T12) est dans la plage de 3 cm à 50 cm.

2. Dispositif selon la revendication 1,
**caractérisé en ce que** le premier dispositif de séparation (T11) et le deuxième dispositif de séparation (T12) sont chacun réalisés sous la forme d'un dispositif de séparation ayant un arbre logé de manière rotative, ou sous la forme d'un dispositif de séparation logé de manière rotative, ou sous la forme d'un filtre logé de manière rotative ;
le premier dispositif de séparation (T11) et le deuxième dispositif de séparation (T12) sont chacun disposés dans le dispositif (V) de telle sorte que l'axe central ou un axe de rotation de chacun du premier dispositif de séparation (T11) et du deuxième dispositif de séparation (T12) ou de chacune de la première surface (FA11) et de la deuxième surface (FA12) est disposé(e) sensiblement parallèlement au niveau de liquide d'un liquide versé dans l'organe de réception (AG) du dispositif (V), ou l'axe central ou un axe de rotation de chacun du premier dispositif de séparation (T11) et du deuxième dispositif de séparation (T12) ou de chacune de la première surface (FA11) et de la deuxième surface (FA12) forme, avec un niveau de liquide d'un liquide versé dans l'organe de réception (AG) du dispositif (V) ou avec l'horizontale, un angle d'une valeur de 0 à 15°, de préférence de 0 à 10°, en particulier de 0 à 5° ;
le premier dispositif de séparation (T11) et le deuxième dispositif de séparation (T12) sont disposés dans le dispositif (V) et l'un par rapport à l'autre de telle sorte que les axes centraux ou un axe de rotation de chacun du premier dispositif de séparation (T11) et du deuxième dispositif de séparation (T12) ou de chacune de la première surface (FA1 1) et de la deuxième surface (FA12) forment un angle d'une valeur de 0 à 15°, de préférence de 0 à 10°, en particulier de 0 à 5° ;
le premier dispositif de séparation (T11) et le deuxième dispositif de séparation (T12) sont disposés dans le dispositif (V) de telle sorte que la plus grande distance, de préférence mesurée parallèlement à l'arbre de rotation ou comme distance normale, entre la première surface (FA1 1) du premier dispositif de séparation (T11) et la deuxième surface (FA12) du deuxième dispositif de séparation (T12) est dans la plage de 5 à 25 cm, de préférence de 10 à 20 cm ; et
la plus petite distance, de préférence mesurée parallèlement à l'arbre de rotation ou comme distance normale, entre la première surface (FA11) du premier dispositif de séparation (T11) et la deuxième surface (FA12) du deuxième dispositif de séparation (T12) est dans la plage de 5 à 25 cm, de préférence de 10 à 20 cm.

3. Dispositif selon la revendication 1 ou 2,
**caractérisé en ce que** le premier dispositif de séparation (T11) et le deuxième dispositif de séparation (T12) sont disposés dans le dispositif (V) de telle sorte que la plus grande distance, de préférence mesurée comme distance normale, entre la première surface (FA1 1) et une paroi du dispositif (V), de préférence de l'organe de réception (AG), et entre la deuxième surface (FA12) et la paroi du dispositif (V), de préférence de l'organe de réception (AG), est dans la plage de 5 à 30 cm, de préférence de 10 à 20 cm ; et/ou
la plus petite distance, de préférence mesurée comme distance normale, entre la première surface (FA1 1) et une paroi du dispositif (V), de préférence de l'organe de réception (AG), et entre la deuxième surface (FA12) et la paroi du dispositif (V), de préférence de l'organe de réception (AG), est dans la plage de > 2 à 25 cm, de préférence de 10 à 20 cm.

4. Dispositif (V) selon l'une des revendications 1 à 3 ou présentant une caractéristique définie dans l'une des revendications 1 à 3, comprenant au moins :
un organe de réception (AG) en forme de cuve pour recevoir la trempe (MA) ;
dans lequel
le premier dispositif de séparation (T11) et le deuxième dispositif de séparation (T12) sont chacun conçus comme un filtre en forme de disque ou de cylindre, logé de manière rotative ;
la première surface (FA11) est la surface de base du premier dispositif de séparation (T11) ;
la deuxième surface (FA12) est la surface de base du deuxième dispositif de séparation (T12) ;
la première surface (FA1 1) et la deuxième surface (FA12) sont chacune conçues comme une surface de filtre plane ou sensiblement plane avec une pluralité d'ouvertures (OP) ;
de préférence, le dispositif (V) est apte à séparer la trempe (MA) en moût (WO) et en trempe résiduelle (RM) au moyen de la première surface (FA1 1) et de la deuxième surface (FA12) ;
l'axe de rotation du premier dispositif de séparation (T11) est disposé perpendiculairement ou sensiblement perpendiculairement à la première surface (FA1 1) ;
l'axe de rotation du deuxième dispositif de séparation (T12) est disposé perpendiculairement ou sensiblement perpendiculairement à la deuxième surface (FA12) ;
l'axe de rotation du premier dispositif de séparation (T11) forme, avec le niveau de liquide d'un liquide versé dans l'organe de réception (AG) ou avec l'horizontale, un angle d'une valeur de 0 à 10°, en particulier de 0 à 5° ;
l'axe de rotation du deuxième dispositif de séparation (T12) forme, avec le niveau de liquide d'un liquide versé dans l'organe de réception (AG) ou avec l'horizontale, un angle d'une valeur de 0 à 10°, en particulier de 0 à 5° ;
le premier dispositif de séparation (T11) et le deuxième dispositif de séparation (T12) sont disposés dans le dispositif (V) de telle sorte que la distance normale entre la première surface (FA11) du premier dispositif de séparation (T11) et la deuxième surface (FA12) du deuxième dispositif de séparation (T12) est dans la plage de 5 à 25 cm, de préférence de 10 à 20 cm ; et
le premier dispositif de séparation (T11) et le deuxième dispositif de séparation (T12) sont chacun disposés par rapport à l'organe de réception (AG) de telle sorte que, pendant le fonctionnement du dispositif (V) en vue de séparer la trempe (MA), la première surface (FA11) et la deuxième surface (FA12) sont chacune recouvertes par la trempe (MA) dans une proportion de l'ordre de 1 à 95 %, de préférence de 5 à 20 %, de préférence de 5 à 15 %, de préférence de 5 à 10 %, de préférence de 20 à 70 %, de préférence de 20 à 50 %, en particulier de 30 à 40 %, ou sont immergées dans la trempe (MA), lorsque la trempe (MA) est située dans l'organe de réception (AG) ; et
sur l'étendue de la proportion restante, la première surface (FA11) et la deuxième surface (FA12) sont chacune disposées dans un espace rempli de gaz (GR) au-dessus de la trempe (MA), ou pénètrent dans celui-ci ;
la première surface (FA11) et la deuxième surface (FA12) ou une partie de celles-ci peuvent être mises en contact avec la trempe (MA), lorsque la trempe (MA) est située dans l'organe de réception (AG) en vue d'être séparée en moût (WO) et en trempe résiduelle (RM) ;
pendant le fonctionnement du dispositif (V), la première surface (FA11) et la deuxième surface (FA12) sont disposées de manière mobile ou déplaçable ou rotative par rapport à la trempe (MA), par rapport à la trempe résiduelle (RM) et/ou par rapport à l'organe de réception (AG).

5. Système pour obtenir un moût (WO) à partir d'une trempe (MA) dans la brasserie ou l'industrie des boissons, comprenant au moins :
un premier dispositif (V1), le premier dispositif (V1) étant un dispositif (V) selon l'une des revendications 1 à 4 ; et
le premier dispositif (V1) pouvant être commandé au moyen d'un premier dispositif de commande (C1), de préférence de telle sorte qu'un mouvement relatif ou un mouvement de rotation de la première surface (FA11) et de la deuxième surface (FA12) s'effectue pendant toute la durée de la séparation de la trempe (MA).

6. Système selon la revendication 5,
**caractérisé en ce que** le premier dispositif de séparation (T11) et le deuxième dispositif de séparation (T12) sont disposés par rapport au premier organe de réception (AG1) de telle sorte que, pendant le fonctionnement du premier dispositif (V1) en vue de séparer la trempe (MA), la première surface (FA1 1) et la deuxième surface (FA12) sont chacune recouvertes par la trempe (MA) dans une proportion de 1 à 95 %, de préférence de 5 à 20 %, de préférence de 5 à 15 %, de préférence de 5 à 10 %, de préférence de 20 à 70 %, ou sont immergées dans la trempe (MA), lorsque la trempe (MA) est située dans le premier organe de réception (AG1) ; et
sur l'étendue de la proportion restante, la première surface (FA11) et la deuxième surface (FA12) sont chacune disposées de préférence dans un premier espace rempli de gaz (GR1) au-dessus de la trempe (MA), ou pénètrent dans celui-ci.

7. Système selon la revendication 5 ou 6,
**caractérisé en ce qu'**il comprend en outre :
un deuxième dispositif (V2), ledit deuxième dispositif (V2) étant un dispositif (V) selon l'une des revendications 1 à 4 ;
le deuxième dispositif (V2) comprenant un premier dispositif de séparation (T21) et un deuxième dispositif de séparation (T22) ;
le premier dispositif de séparation (T21) présentant une première surface (FA21) ;
le deuxième dispositif de séparation (T22) présentant une première surface (FA22) ;
le deuxième dispositif (V2) pouvant être commandé au moyen d'un deuxième dispositif de commande (C2), de préférence de telle sorte que le mouvement relatif de la première surface (FA21) et de la deuxième surface (FA22) s'effectue pendant toute la durée de la séparation de la première trempe résiduelle (RM1) ; et
de préférence, le système comprenant un premier organe (WZ1) destiné à amener de l'eau ou un moût dilué, de préférence un troisième moût (WO3).

8. Système selon la revendication 7,
**caractérisé en ce que** le premier dispositif de séparation (T21) et le deuxième dispositif de séparation (T22) du deuxième dispositif (V2) sont disposés par rapport au deuxième organe de réception (AG2) de telle sorte que, pendant le fonctionnement du deuxième dispositif (V2) en vue de séparer la première trempe résiduelle (RM1), la première surface (FA21) du premier dispositif de séparation (T21) et la deuxième surface (FA22) du deuxième dispositif de séparation (T22) sont recouvertes par la première trempe résiduelle (RM1) dans une proportion de 1 à 95 %, de préférence de 5 à 20 %, de préférence de 5 à 15 %, de préférence de 5 à 10 %, de préférence de 20 à 70 %, ou sont immergées dans la première trempe résiduelle (RM1),
lorsque la première trempe résiduelle (RM1) est située dans le deuxième organe de réception (AG2) ; et
les proportions restantes de la première surface (FA21) et de la deuxième surface (FA22) sont de préférence disposées chacune dans un deuxième espace rempli de gaz (GR2), ou pénètrent dans celui-ci, le deuxième espace rempli de gaz (GR2) étant disposé par-dessus ou au-dessus de la première trempe résiduelle (RM1).

9. Système selon l'une des revendications 5 à 8,
**caractérisé en ce que** le système comprend un premier organe (WZ1), un deuxième organe (WZ2) et/ou un troisième organe (WZ3), destiné chacun à amener de l'eau ou un moût dilué ; et
de préférence, le premier organe (WZ1) est disposé dans le système de telle sorte que l'eau ou le moût dilué est amené(e) à la trempe ou à la première trempe résiduelle (RM1) située dans le premier dispositif (V1) et/ou en aval du premier dispositif (V1) et en amont du deuxième dispositif (V2) et/ou dans le deuxième dispositif (V2) ; et/ou
de préférence, le deuxième organe (WZ2) est disposé dans le système de telle sorte que l'eau ou le moût dilué est amené(e) à la deuxième trempe résiduelle (RM2) située dans le deuxième dispositif (V2) et/ou en aval du deuxième dispositif (V2) et en amont du troisième dispositif (V3) et/ou dans le troisième dispositif (V3) ; et/ou
de préférence, le troisième organe (WZ3) est disposé dans le système de telle sorte que l'eau ou le moût dilué est amené(e) à une troisième trempe résiduelle (RM3) située dans le troisième dispositif (V3) et/ou en aval du troisième dispositif (V3) et en amont d'un quatrième dispositif (V4) et/ou dans le quatrième dispositif (V4).

10. Système selon la revendication 9,
**caractérisé en ce que** le premier organe (WZ1), le deuxième organe (WZ2) et/ou le troisième organe (WZ3) sont chacun conçus comme un orifice de sortie, de préférence comme une buse, en particulier comme une buse à jet plat, une tête de pulvérisation, ou une boule de pulvérisation.

11. Système selon l'une des revendications 7 à 10,
**caractérisé en ce que** le système comporte au moins un élément de retenue ;
de préférence, un premier élément de retenue étant disposé en aval du premier dispositif (V1) et en amont du deuxième dispositif (V2) ; et/ou
de préférence, un deuxième élément de retenue étant disposé en aval du deuxième dispositif (V2) et en amont du troisième dispositif (V3) ; et/ou
de préférence, un troisième élément de retenue étant disposé en aval du troisième dispositif (V3) et en amont du quatrième dispositif (V4).

12. Procédé pour obtenir un moût à partir d'une trempe dans la brasserie ou l'industrie des boissons, comprenant les étapes consistant à :
(a) amener une trempe (MA) à un premier organe de réception (AG1) d'un premier dispositif (V1), le premier dispositif (V1) étant un dispositif (V) selon l'une des revendications 1 à 4 ;
(b) séparer la trempe (MA) située dans le premier dispositif (V1) en un premier moût (WO1) et en une première trempe résiduelle (RM1), par séparation ou filtration de la trempe (MA) à l'aide de la première surface (FA11) du premier dispositif de séparation (T1) et de la deuxième surface (FA12) du deuxième dispositif de séparation (T12) du premier dispositif (V1) ;
dans lequel
le filtrat ou le perméat est le premier moût (WO1), et le résidu de filtration ou le rétentat est la première trempe résiduelle (RM1) ;
la séparation est entraînée par la pression hydrostatique de la trempe (MA) et/ou par une autre pression agissant sur la trempe (MA) et/ou par une dépression agissant sur la première trempe résiduelle (RM1) ;
pendant la séparation de la trempe (MA) en le premier moût (WO1) et en la première trempe résiduelle (RM1), la première surface (FA11) et la deuxième surface (FA12) se déplacent chacune par rapport à la trempe (MA) située dans le premier dispositif (V1), par rapport à la première trempe résiduelle (RM1) située dans le premier dispositif (V1) et/ou par rapport au premier organe de réception (AG1), ou, pendant la séparation de la trempe (MA), la première surface (FA11) tourne autour d'un premier axe (AX11) du premier dispositif de séparation (T11) du premier dispositif (V1), et, pendant la séparation de la trempe (MA), la deuxième surface (FA12) tourne autour d'un deuxième axe (AX21) du deuxième dispositif de séparation (T12) du premier dispositif (V1) ; et
le mouvement relatif ou le mouvement de rotation de la première surface (FA11) et de la deuxième surface (FA12) est ininterrompu ou intermittent, de préférence à intervalles de temps réguliers, pendant toute la durée de la séparation de la trempe (MA).

13. Procédé selon la revendication 12, comprenant en outre les étapes consistant à :
(c) mélanger de l'eau ou un moût dilué, de préférence le troisième moût (WO3), avec la première trempe résiduelle (RM1) obtenue lors de la séparation selon l'étape (b), selon un rapport de débit volumique prédéfini, pour obtenir un premier mélange (MX1) ;
(d) avant l'étape (c), amener la première trempe résiduelle (RM1) vers le deuxième organe de réception (AG2) du deuxième dispositif (V2) ; ou
après l'étape (c), amener le premier mélange (MX1) vers le deuxième organe de réception (AG2) du deuxième dispositif (V2) ;
le deuxième dispositif (V2) étant un dispositif (V) selon l'une des revendications 1 à 4 ;
(e) séparer le premier mélange (MX1) ainsi obtenu en un deuxième moût (WO2) et en une deuxième trempe résiduelle (RM2), au moyen d'un premier dispositif de séparation (T21) et d'un deuxième dispositif de séparation (T22) du deuxième dispositif (V2), ou par séparation ou filtration du premier mélange (MX1) à l'aide de la deuxième surface (FA21) du premier dispositif de séparation (T21) et de la deuxième surface (FA22) du deuxième dispositif de séparation (T22) dans le deuxième dispositif (V2) ;
dans lequel
le filtrat ou le perméat est le deuxième moût (WO2), et le résidu de filtration ou le rétentat est la deuxième trempe résiduelle (RM2) ;
la séparation est entraînée par la pression hydrostatique du premier mélange (MX1) et/ou par une autre pression agissant sur le premier mélange (MX1) et/ou par une dépression agissant sur la deuxième trempe résiduelle (RM2) ;
pendant la séparation du premier mélange (MX1) en le deuxième moût (WO2) et en la deuxième trempe résiduelle (RM2), la première surface (FA21) du premier dispositif de séparation (T21) la deuxième surface (FA22) du deuxième dispositif de séparation (T22) du deuxième dispositif (V2) se déplacent par rapport au premier mélange (MX1) situé dans le deuxième dispositif (V2), par rapport à la deuxième trempe résiduelle (RM2) située dans le deuxième dispositif (V2) et/ou par rapport au deuxième organe de réception (AG2), ou
pendant la séparation du premier mélange (MX1) en le deuxième moût (WO2) et en la deuxième trempe résiduelle (RM2), la première surface (FA21) du premier dispositif de séparation (T21) du deuxième dispositif (V2) tourne autour d'un premier axe (AX21) du premier dispositif de séparation (T21) du deuxième dispositif (V2), et la deuxième surface (FA22) du deuxième dispositif de séparation (T22) du deuxième dispositif (V2) tourne autour d'un deuxième axe (AX22) du deuxième dispositif de séparation (T22) du deuxième dispositif (V2) ; et
le mouvement relatif ou le mouvement de rotation de la première surface (FA21) et de la deuxième surface (FA22) est ininterrompu ou intermittent, de préférence à intervalles de temps réguliers, pendant toute la durée de la séparation du premier mélange (MX1).

14. Utilisation d'un dispositif (V) selon l'une des revendications 1 à 4 ou d'un système (S) selon l'une des revendications 5 à 11, pour l'obtention continue ou discontinue d'un moût (WO) à partir d'une trempe (MA) dans la brasserie ou l'industrie des boissons ; ou
pour l'obtention continue ou discontinue d'un moût dilué à partir d'une trempe résiduelle (RM) ou d'une drêche ou d'un mélange contenant de l'eau et de la trempe résiduelle (RM) ou de la drêche ; ou
pour le houblonnage d'un moût, d'une bière, d'une autre boisson alcoolisée ou non ou d'un précurseur de ceux-ci.
